(19) Europäisches Patentamt
European Patent Office
Office européen des brevets

(11) EP 1 460 114 B1

# (12) EUROPEAN PATENT SPECIFICATION

(45) Date of publication and mention of the grant of the patent:
**23.08.2006 Bulletin 2006/34**

(51) Int Cl.:
***C09D 11/00*** *(2006.01)* ***B41M 5/00*** *(2006.01)*
***C07C 259/00*** *(2006.01)* ***C07C 271/00*** *(2006.01)*
***C07C 275/00*** *(2006.01)*

(21) Application number: **04100925.9**

(22) Date of filing: **08.03.2004**

## (54) New stabilizers for ink-jet recording materials.

Neue Stabilisatoren für Aufzeichnungsmaterialien

Stabilisateurs nouveaux pour materiaux d' enregistrement par jet d' encre

(84) Designated Contracting States:
**DE FR GB**

(30) Priority: **18.03.2003 EP 03100676**

(43) Date of publication of application:
**22.09.2004 Bulletin 2004/39**

(73) Proprietor: **AGFA-GEVAERT**
**2640 Mortsel (BE)**

(72) Inventors:
- **Loccufier, Johan**
  **2640, Mortsel (BE)**
- **Lingier, Stefaan**
  **2640, Mortsel (BE)**

(56) References cited:
**EP-A- 1 251 154** **DE-A- 10 218 503**
**US-A- 5 922 121** **US-A1- 2002 096 082**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### Technical field

The present invention relates to new stabilizers for ink-jet recording materials having an improved stabilization of the ink-jet image against light fading and gas fading.

### Background art

In ink-jet printing tiny drops of ink fluid are jetted directly onto an ink receptor surface without physical contact between the printing device and the receptor. The printing device stores the printing data electronically and controls a mechanism for ejecting the drops image-wise. Printing is accomplished by moving the print head across the paper or vice versa. Early patents on ink-jet printers include **US 3739393** (MEAD CORP), **US 3805273** (MEAD CORP) and **US 3891121** (MEAD CORP).

Ink compositions for ink-jet typically include following ingredients: dyes or pigments, water and/or organic solvents, humectants such as glycols, detergents, thickeners, polymeric binders, preservatives, etc.. It will be readily understood that the optimal composition of such ink is dependent on the ink-jetting method used and on the nature of the ink-receiver to be printed. The ink compositions can be roughly divided in :

- water based, the drying mechanism involving absorption, penetration and evaporation;
- oil based, the drying involving absorption and penetration;
- solvent based, the drying mechanism involving primarily evaporation;
- hot melt or phase change, in which the ink is liquid at the ejection temperature but solid at room temperature and wherein drying is replaced by solidification;
- UV-curable, in which drying is replaced by polymerization.

It is known that the ink-receiving layers in ink-jet recording materials must meet different stringent requirements:

- the ink-receiving layer should have a high ink absorbing capacity, so that the dots will not flow out and will not be expanded more than is necessary to obtain a high optical density;
- the ink-receiving layer should have a high ink absorbing speed (short ink drying time) so that the ink-droplets will not feather if smeared immediately after applying;
- the ink dots that are applied to the ink-receiving layer should be substantially round in shape and smooth at their peripheries. The dot diameter must be constant and accurately controlled;
- the receiving layer must be readily wetted so that there is no "puddling", i.e. coalescence of adjacent ink dots, and an earlier absorbed ink drop should not show any "bleeding", i.e. overlap with neighbouring or later placed dots;
- transparent ink-jet recording elements must have a low haze-value and be excellent in transmittance properties;
- after being printed the image must have a good resistance regarding water-fastness, light-fastness, and good endurance under severe conditions of temperature and humidity;
- the ink-jet recording element may not show any curl or sticky behaviour if stacked before or after being printed;
- the ink-jet recording element must be able to move smoothly through different types of printers;

All these properties are often in a relation of trade-off, as it is difficult to satisfy them all at the same time. A particular difficult property is the stability of the color densities of the finished color ink-jet image when exposed to light for a longer period, i.e. light-fastness.

**JP 61154989 A** (MITSUBISHI PAPER MILLS) discloses an ink-jet recording medium imparting an aqueous ink image excellent in water resistance and light fastness, realized by incorporating a hydrazide compound in the recording medium.

**JP 7314881 A** (ASAHI GLASS) discloses an ink-jet recording sheet exhibiting good ink absorbability, good fixation properties of coloring matter and no generation of color changes in long time preservation, by adding to the ink-receiving layer a compound chosen from particular urea derivatives, semicarbazide derivatives, carbohydrazide derivatives, and hydrazide derivatives.

**DE 10218503 A** discloses an ink-jet recording material containing a compound chosen from a 4-oxysemicarbazide and a carbohydrazide having two substituents different from hydrogen on at least the nitrogen atom in the 1-position and the nitrogen atom in the 5-position. **US2002/096082 A1** discloses an ink composition comprising: an aqueous medium; a high boiling organic solvent dispersed in the aqueous medium; an oil-soluble dye dissolved in the high boiling organic solvent; and a compound represented by the formula (I) defined in the specification: wherein the oil-soluble dye is represented by the formula (II) defined in the specification.

**EP 1251154 A** discloses an ink composition for inkjet recording comprising: an azo dye having an aromatic nitrogen-containing 6-membered heterocycle as a coupling component; a compound represented by the formula (I) defined in the specification and an aqueous medium wherein the azo dye is dissolved or dispersed in the aqueous medium.

**JP 2000343812 A** (KONICA) discloses an ink-jet recording sheet, improved for light fading of a jetted image, by incorporating a specific ultraviolet absorbent.

It is well-known by those skilled in the art that the light fading of colorants is mainly due to an oxidative decomposition of the colorant catalyzed by light, in particular by the UV spectral part. Furthermore, colorants are subject to so-called "dark fading" or "gas fading", due to the influences of certain atmospheric gases, the most important one being ozone. Therefore, there is a permanent need of more effective compounds for protecting the colorants of an ink-jet image against fading by light and gas.

## OBJECTS OF THE INVENTION

It is an object of the present invention to provide an ink-jet recording material capable of providing an image exhibiting high image stability upon exposure to light in an ambient atmosphere

It is a further object of the present invention to provide a method for stabilizing an image on an ink-jet recording material against light fading and gas fading.

It is still another object of the present invention to provide a compound having stabilizing properties for light fading and gas fading of an image on an ink-jet recording material.

Further objects and advantages of the present invention will become apparent from the description hereinafter.

## SUMMARY OF THE INVENTION

It has been surprisingly found that the presence of compounds according to formula (I):

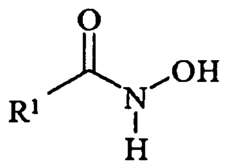

formula (I)

wherein,

$R^1$ is selected from the group consisting of $-CR^2R^3R^4$, $-OCR^5R^6R^7$ and $-NR^8R^9$; $R^2$, $R^3$, $R^5$, $R^6$ and $R^8$ are independently selected from the group consisting of hydrogen, unsubstituted saturated or unsaturated aliphatic groups, saturated or unsaturated aliphatic groups substituted with heteroatoms, a substituted or unsubstituted aromatic or heteroaromatic ring, unsubstituted saturated or unsaturated alicyclic groups and saturated or unsaturated alicyclic groups substituted with heteroatoms, $R^4$, $R^7$ and $R^9$ are independently selected from the group consisting of unsubstituted saturated or unsaturated aliphatic groups, saturated or unsaturated aliphatic groups substituted with heteroatoms, a substituted or unsubstituted aromatic or heteroaromatic ring, unsubstituted saturated or unsaturated alicyclic groups and saturated or unsaturated alicyclic groups substituted with heteroatoms, $R^3$ and $R^4$ may represent the necessary atoms to form a 5- to 8-membered ring; $R^5$ and $R^7$ may represent the necessary atoms to form a 5- to 8-membered ring; and $R^8$ and $R^9$ may represent the necessary atoms to form a 5- to 8-membered ring, in or adjacent to ink-jet images results in a substantial improvement in the stability of ink-jet ink images to light and gas fading, whether initially present in the ink-receiving layer or applied as a finish to the ink-jet image.

Objects of the present invention have further been realized by an ink-jet recording material containing at least one non-polymeric compound according to formula (I) as described above.

Objects of the present invention have also been realized by use of at least one non-polymeric compound according to formula (I) as described above, in an ink-jet recording material or a liquid for coating on an ink-jet image.

Objects of the present invention have also been realized by a method for stabilizing an image on an ink-jet recording material comprising the steps of:

(1) preparing a coating solution comprising at least one compound according to formula (I) as described above, and
(2) coating said coating solution onto a support, an ink-receiving layer or an ink-jet image.

Further advantages and embodiments of the present invention will become apparent from the following description.

## DETAILED DESCRIPTION OF THE INVENTION

### Definitions

The term "fading", as used in disclosing the present invention in light fading and gas fading, means the loss of optical density of an ink-jet image, due to exposure to light and gas respectively.
The term "colorant", as used in the present invention, means dyes and pigments.
The term "dye", as used in the present invention, means a colorant having a solubility of 10 mg/L or more in the medium in which it is applied and under the ambient conditions pertaining.
The term "pigment" is defined in DIN 55943, herein incorporated by reference, as an inorganic or organic, chromatic or achromatic colouring agent that is practically insoluble in the application medium under the pertaining ambient conditions, hence having a solubility of less than 10 mg/L therein.
The term "filler", as used in the present invention, means an inorganic or organic material added to a layer of the ink-jet recording material to modify its properties, e.g. adhesion of a subbing layer to a polyester film, opacity of an ink-jet recording material and tribo-electrical properties.
The term "polymeric", as used in the present invention, relates to chemical compounds consisting essentially of repeating structural units corresponding to the monomers used in the synthesis of these chemical compounds. A dimer, i.e. a condensation product of two molecules, is not considered to be polymeric.
The term "alkyl" means all variants possible for each number of carbon atoms in the alkyl group i.e. for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl etc.
The term "acyl group" as used in disclosing the present invention means-(C=O)-aryl and -(C=O)-alkyl groups.
The term "saturated aliphatic group" as used in disclosing the present invention means saturated straight chain, branched chain and alicyclic hydrocarbon groups.
The term "unsaturated aliphatic group" as used in disclosing the present invention means straight chain, branched chain and alicyclic hydrocarbon groups which contain at least one double or triple bond.
The term "aromatic group" as used in disclosing the present invention means an assemblage of cyclic conjugated carbon atoms, which are characterized by large resonance energies, e.g. benzene, naphtalene and anthracene.
The term "alicyclic hydrocarbon group" means an assemblage of cyclic carbon atoms, which do not form an aromatic group, e.g. cyclohexane.
The term "substituted" as used in disclosing this invention means that one or more of the carbon atoms and/or that a hydrogen atom of one or more of carbon atoms in an aliphatic group, an aromatic group or an alicyclic hydrocarbon group, are replaced by an oxygen atom, a nitrogen atom, a sulfur atom, a selenium atom or a tellurium atom, or a group containing one or more of these said carbon and hydrogen replacing atoms. Such substituents include hydroxyl groups, ether groups, carboxylic acid groups, ester groups, amide groups and amine groups.
The term "heteroaromatic group" means an aromatic group wherein at least one of the cyclic conjugated carbon atoms is replaced by an oxygen atom, a nitrogen atom, a sulfur atom, a selenium atom or a tellurium atom.
The term "heterocyclic group" means an alicyclic hydrocarbon group wherein at least one of the cyclic carbon atoms is replaced by an oxygen atom, a nitrogen atom, a sulfur atom, a selenium atom or a tellurium atom.

Non-polymeric compound

The non-polymeric compound, used as an image-stabilizerin the ink-jet receiving layer of the ink-jet recording material and in the liquid for coating on an ink-jet image according to the present invention, is a non-polymeric compound according to formula (I):

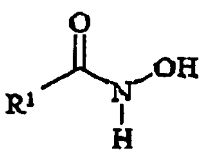

formula (I)

wherein,

$R^1$ is selected from the group consisting of $-CR^2R^3R^4$, $-OCR^5R^6R^7$ and $-NR^8R^9$,

$R^2$, $R^3$, $R^5$, $R^6$ and $R^8$ are independently selected from the group consisting of hydrogen, unsubstituted saturated or unsaturated aliphatic groups, saturated or unsaturated aliphatic groups substituted with heteroatoms, a substituted or unsubstituted aromatic or heteroaromatic ring, unsubstituted saturated or unsaturated alicyclic groups and saturated or unsaturated alicyclic groups substituted with heteroatoms;

$R^4$, $R^7$ and $R^9$ are independently selected from the group consisting of unsubstituted saturated or unsaturated aliphatic groups, saturated or unsaturated aliphatic groups substituted with heteroatoms, a substituted or unsubstituted aromatic or heteroaromatic ring, unsubstituted saturated or unsaturated alicyclic groups and saturated or unsaturated alicyclic groups substituted with heteroatoms;

$R^3$ and $R^4$ may represent the necessary atoms to form a 5- to 8-membered ring,

$R^5$ and $R^7$ may represent the necessary atoms to form a 5- to 8-membered ring, and

$R^8$ and $R^9$ may represent the necessary atoms to form a 5- to 8-membered ring.

According to a preferred embodiment of the non-polymeric compound according to formula (I), used in the ink-jet recording material and process, according to the present invention, $R^1$ is $-NR^8R^9$ with $R^8$ and $R^9$ either representing the atoms necessary to form a 5- or 6-membered ring or at least one of $R^8$ and $R^9$ being a polyhydroxy-substituted alkyl group or a HALS-group e.g.

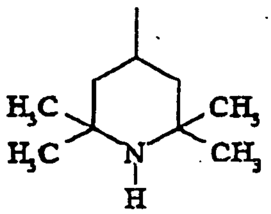

According to a further preferred embodiment, the at least one non-polymeric compound used in the ink-jet recording material and the method for stabilizing an image on an ink-jet recording material is selected from the group consisting of

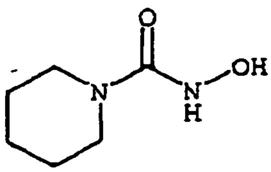

,

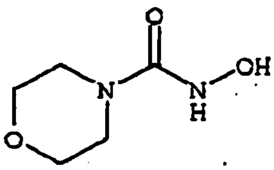

,

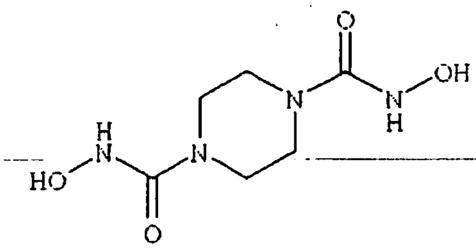

,

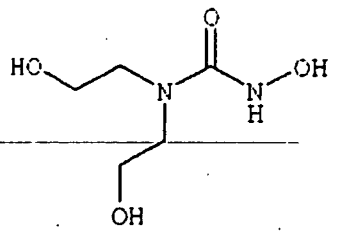

,

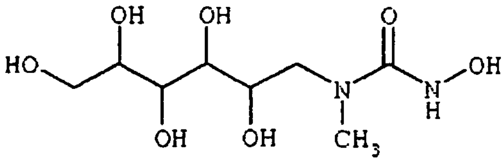 , 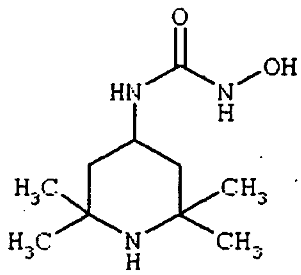 ,

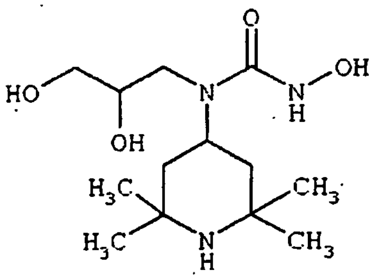 , 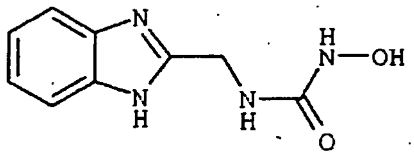 ,

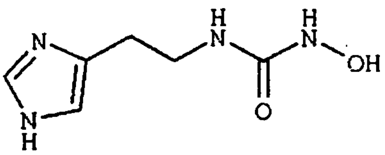 , 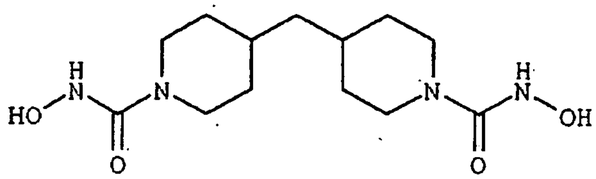

, 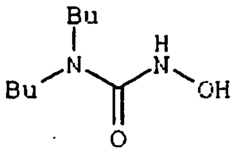 , 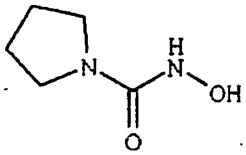 , 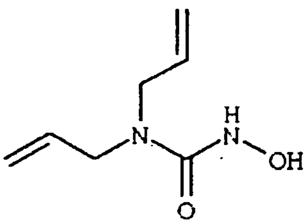 ,

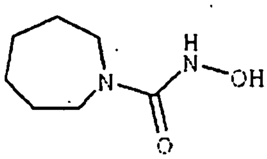 , 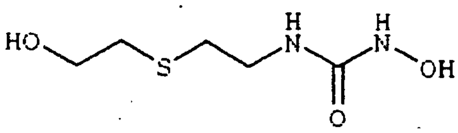 ,

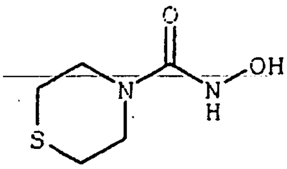 , 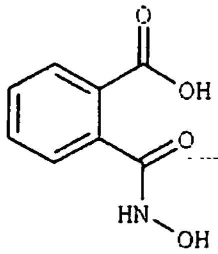 , 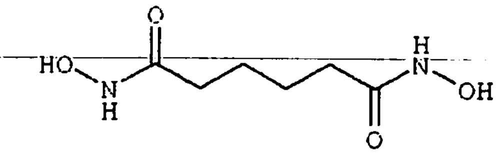 ,

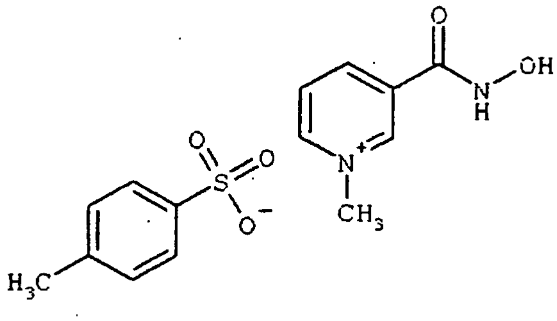 , 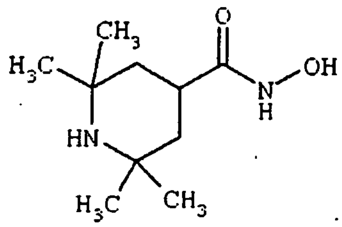 ,

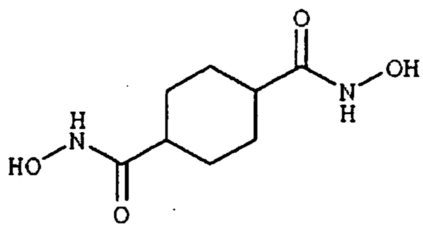 , 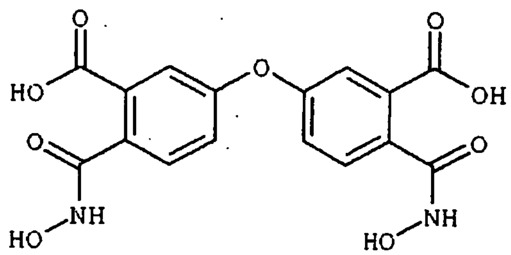 ,

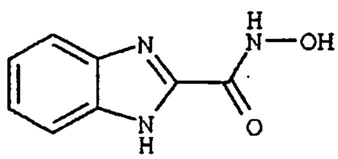 , 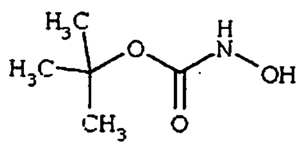 ,

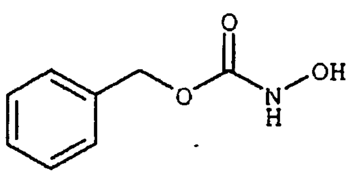 and 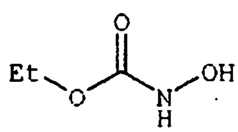 .

Suitable examples of non-polymeric compounds according to formula (I) with $R^1$ equal to $-NR^8R^9$ are included in Table 1.

**Table 1**

SN-1

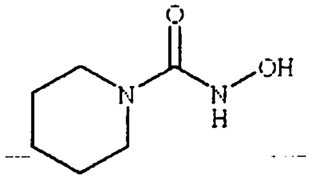

SN-2

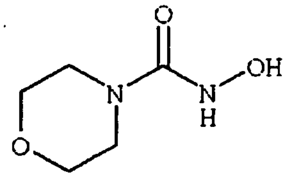

SN-3

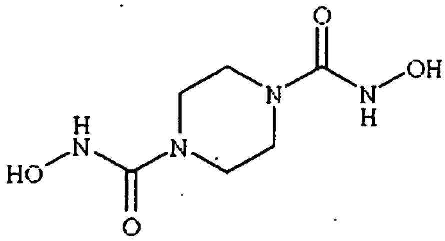

SN-4

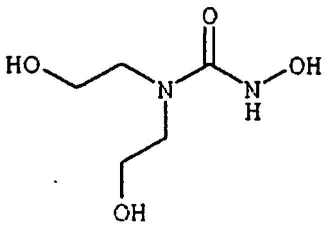

SN-5

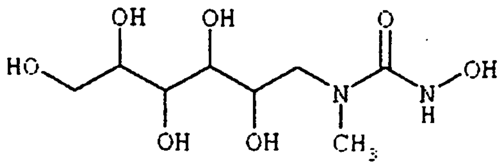

SN-6

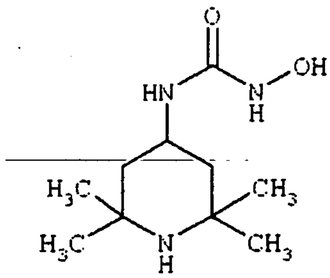

(continued)

SN-7

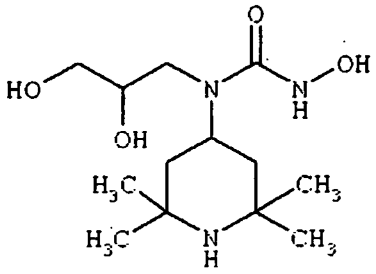

SN-8

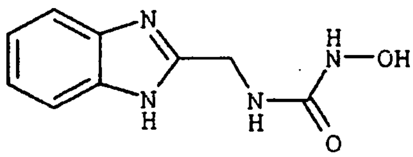

SN-9

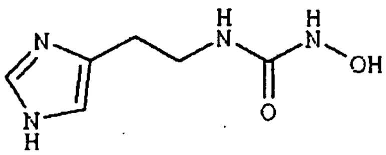

SN-10

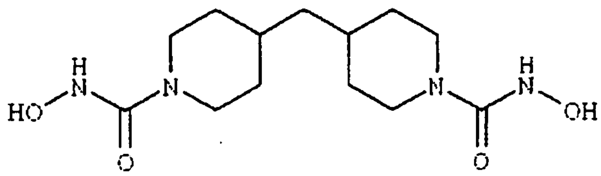

SN-11

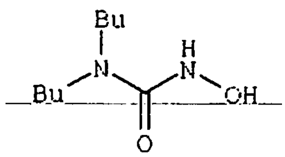

SN-12

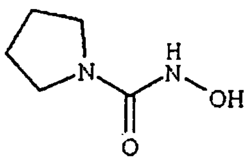

(continued)

SN-13

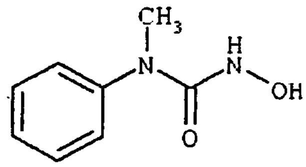

SN-14

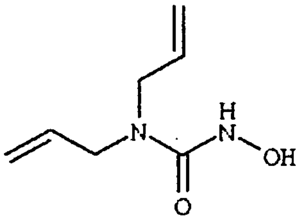

SN-15

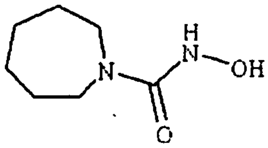

SN-16

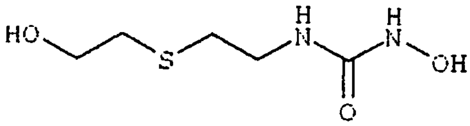

SN-17

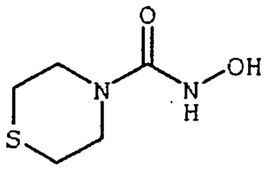

Suitable examples of non-polymeric compounds according to formula (I) with $R^1$ equal to $-CR^2R^3R^4$ are included in Table 2.

**Table 2**

SC-1

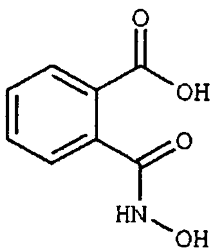

(continued)

SC-2

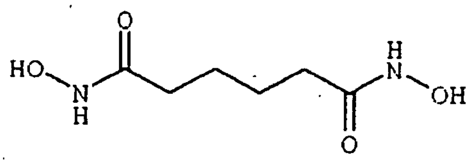

SC-3

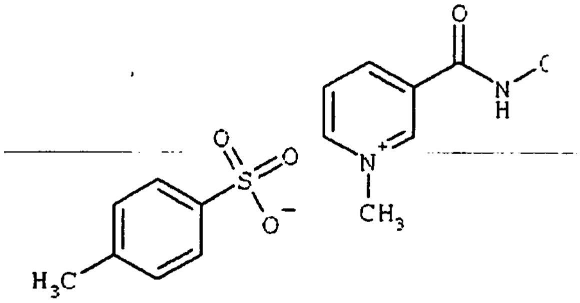

SC-4

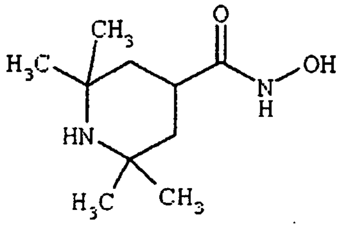

SC-5

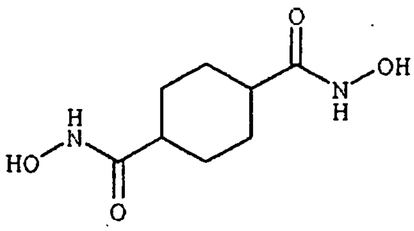

SC-6

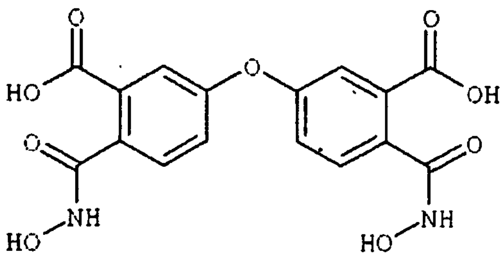

SC-7

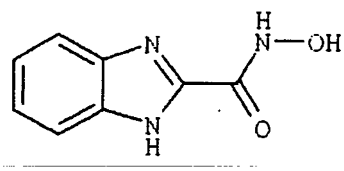

Suitable examples of non-polymeric compounds according to formula (I) with $R^1$ equal to $-OCR^5R^6R^7$ are included in Table 3.

**Table 3**

SO-1

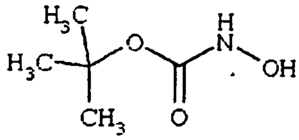

SO-2

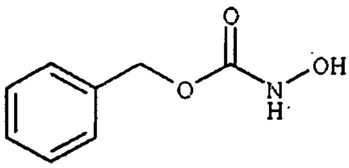

SO-3

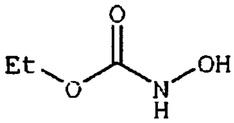

The non-polymeric compounds according to formula (I) used in the ink-jet recording material according to the present invention can be prepared according to conventional synthetic procedures. As an illustration the synthesis of SN-2, SN-5 and SN-6 will be described in detail.

<u>The synthesis of non-polymeric compound SN-2:</u>

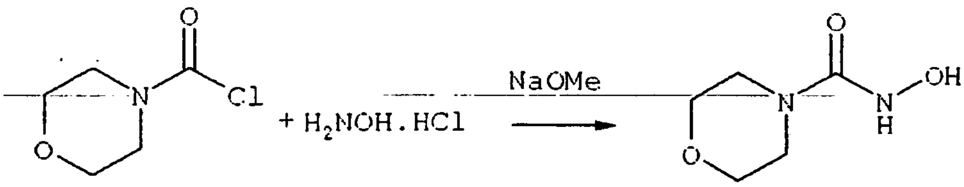


1.16 kg (1.65 mol) of hydroxylamine chlorohydrate was dissolved in 4.5 L of methanol. The reaction mixture was kept at 10 to 15°C and 5.65 L (30 mol) of a 30% NaOMe solution in methanol and 2.24 kg (15 mol) of N-chlorocarbonyl-morpholine were added in small portions. Each time a fraction of NaOMe was added it was followed by the addition of a fraction of the N-chlorocarbonyl-morpholine. The total amount was added in 10 fractions over 5 hours while the temperature was kept at 15°C. Upon complete addition, the reaction mixture was heated to 60°C and the reaction was allowed to continue at 60°C for an additional 30 minutes. The precipitated salts were removed by filtration at 60°C and the residual salts were washed at 60°C with 2 L of methanol. The methanol fractions were pooled and the solvent was removed under reduced pressure. The solid residue was treated with 8 L of acetone and isolated by filtration. The crude substance SN-2 was recrystallized from 5.6 L of acetonitrile and 1.4 L of methylcellosolve. 1.33 kg (62%) of SN-2 was isolated as a white crystalline compound.

<u>The synthesis of non-polymeric compound SN-5:</u>

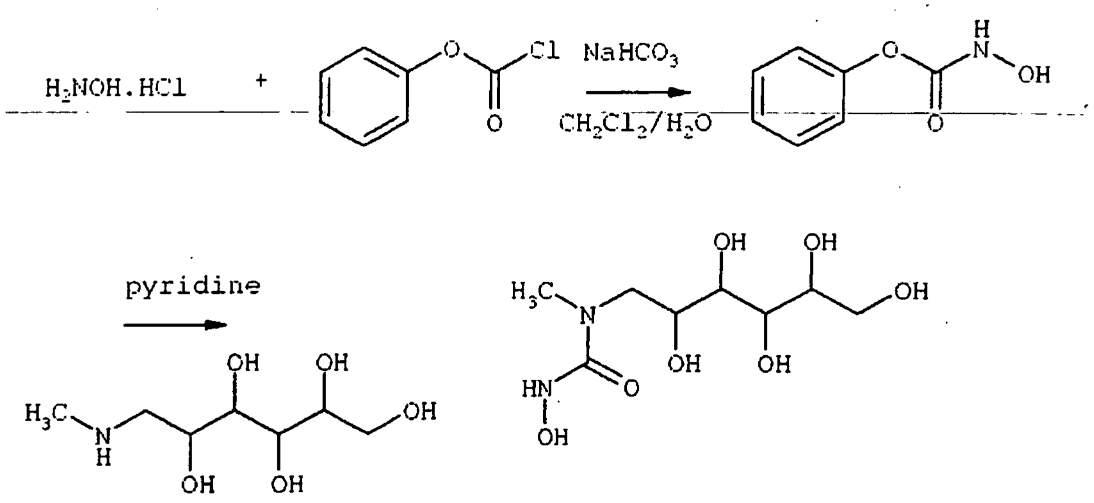


30.4 g (0.44 mol) of hydroxylamine chlorohydrate and 64.7g (0.77mol) of $NaHCO_3$ were dissolved in 385 mL of water. The reaction mixture was cooled to 0°C and a solution of 44 mL (0.35 mol) of phenyl chloroformate in 280 ml of methylenechloride was added dropwise. The reaction was allowed to continue for one and a half hour at room temperature. The reaction mixture was diluted with 230 mL of water, 230 mL of methylenechloride and 230 mL of ethyl acetate. The organic phase was isolated, washed with 150 mL of a saturated sodium chloride solution, dried over $MgSO_4$ and evaporated under reduced pressure. 53.6 g (77 %) of N-hydroxy-phenyl-carbamate was isolated.

14.6 g (75 mmol) of N-methyl-D-glucosamine was dissolved in 75 mL of pyridine. 11.5 g (75 mmol) of N-hydroxy-phenyl-carbamate was added and the reaction was allowed to continue for 16 hours at 30°C. The reaction mixture was poured into 400 ml of acetone and the precipitated crude substance SN-5 was isolated by filtration. The crude product was treated four times with 400 mL of acetone and dried. 12.9 g (68%) of SN-5 was isolated.

<u>The synthesis of non-polymeric compound SN-6:</u>

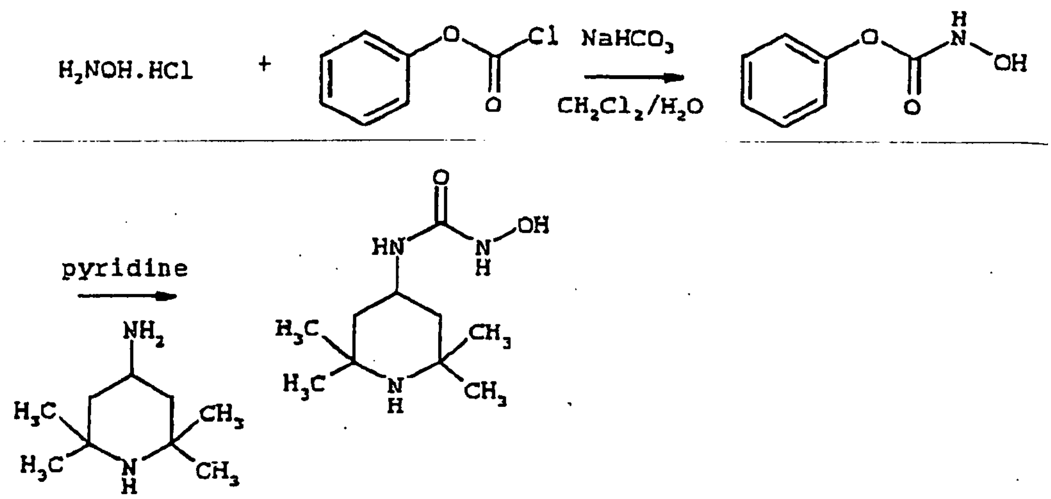


N-hydroxy-phenyl-carbamate was prepared as described for the synthesis of image stabilizer SN-5. 5.2 g of (33 mmol) 4-amino-2,2,6,6-tetramethylpiperidine was dissolved in 100 mL of pyridine and 5.1 g (33 mmol) of N-hydroxy-phenyl-carbamate was added. The reaction was allowed to continue for 16 hours at 30°C. The reaction mixture was poured into 200 mL of acetone and the precipitated product was isolated by filtration. The crude substance SN-6 was treated twice with 200 mL acetone and dried. 1.6 g (23%) of SN-6 was isolated.

## Ink-jet ink

The ink-jet ink according to the present invention is preferably a water based, a solvent based or an oil based ink. The ingredients of the ink-jet ink will now be explained in detail.

Colorants for the ink-jet inks

The ink-jet ink contains at least one colorant. Colorants may be dyes, pigments or a combination thereof. Both organic and/or inorganic pigments may be used.
Dyes suitable for the ink-jet ink include direct dyes, acidic dyes, basic dyes and reactive dyes.
Suitable direct dyes for the ink-jet ink include:

- C.I. Direct Yellow 1, 4, 8, 11, 12, 24, 26, 27, 28, 33, 39, 44, 50, 58, 85, 86, 100, 110, 120, 132, 142, and 144
- C.I. Direct Red 1, 2, 4, 9, 11, 134, 17, 20, 23, 24, 28, 31, 33, 37, 39, 44, 47, 48, 51, 62, 63, 75, 79, 80, 81, 83, 89, 90, 94, 95, 99, 220, 224, 227 and 343
- C.I. Direct Blue 1, 2, 6, 8, 15, 22, 25, 71, 76, 78, 80, 86, 87, 90, 98, 106, 108, 120, 123, 163, 165, 192, 193, 194, 195, 196, 199, 200, 201, 202, 203, 207, 236, and 237
- C.I. Direct Black 2, 3, 7, 17, 19, 22, 32, 38, 51, 56, 62, 71, 74, 75, 77, 105, 108, 112, 117, and 154

Suitable acidic dyes for the ink-jet ink include:

- C.I. Acid Yellow 2, 3, 7, 17, 19, 23, 25, 20, 38, 42, 49, 59, 61, 72, and 99
- C.I. Acid Orange 56 and 64
- C.I. Acid Red 1, 8, 14, 18, 26, 32, 37, 42, 52, 57, 72, 74, 80, 87, 115, 119, 131, 133, 134, 143, 154, 186, 249, 254, and 256
- C.I. Acid Violet 11, 34, and 75
- C.I. Acid Blue 1, 7, 9, 29, 87, 126, 138, 171, 175, 183, 234, 236, and 249
- C.I. Acid Green 9, 12, 19, 27, and 41
- C.I. Acid Black 1, 2, 7, 24, 26, 48, 52, 58, 60, 94, 107, 109, 110, 119, 131, and 155

Suitable reactive dyes for the ink-jet ink include:

- C.I. Reactive Yellow 1, 2, 3, 14, 15, 17, 37, 42, 76, 95, 168, and 175
- C.I. Reactive Red 2, 6, 11, 21, 22, 23, 24, 33, 45, 111, 112, 114, 180, 218, 226, 228, and 235
- C.I. Reactive Blue 7, 14, 15, 18, 19, 21, 25, 38, 49, 72, 77, 176, 203, 220, 230, and 235
- C.I. Reactive Orange 5, 12, 13, 35, and 95
- C.I. Reactive Brown 7, 11, 33, 37, and 46
- C.I. Reactive Green 8 and 19
- C.I. Reactive Violet 2, 4, 6, 8, 21, 22, and 25
- C.I. Reactive Black 5, 8, 31, and 39

Suitable basic dyes for the ink-jet ink include:

- C.I. Basic Yellow 11, 14, 21, and 32
- C.I. Basic Red 1, 2, 9, 12, and 13
- C.I. Basic Violet 3, 7, and 14
- C.I. Basic Blue 3, 9, 24, and 25

Dyes can only manifest the ideal color in an appropriate range of pH value. Therefore, the ink-jet ink preferably further comprises a pH buffer, such as potassium hydroxide (KOH).
Pigments suitable for the ink-jet ink include as red or magenta pigments: Pigment Red 3, 5, 19, 22, 31, 38, 43, 48: 1, 48: 2, 48: 3, 48: 4, 48: 5, 49: 1, 53: 1, 57: 1, 57: 2, 58: 4, 63: 1, 81, 81: 1, 81:2, 81:3, 81:4, 88, 104, 108, 112, 122, 123, 144, 146, 149, 166, 168, 169, 170, 176, 177, 178, 179, 184, 185, 202, 208, 210, 216, 226, 257, 264; Pigment Violet 3, 19, 23, 29, 30, 37, 50, and 88; as blue or cyan pigments: Pigment Blue 1, 15, 15: 1, 15: 2, 15: 3, 15: 4, 15: 6, 16, 17-1, 22, 27, 28, 29, 36, and 60; as green pigments: Pigment green 7, 26, 36, and 50; as yellow pigments: Pigment Yellow 1, 3, 12, 13, 14, 17, 34, 35, 37, 55, 74, 81, 83, 93, 94, 95, 97, 108, 109, 110, 120, 128, 129, 137, 138, 139, 150, 151, 153, 154, 155, 157, 166, 167, 168, 177, 180, 185, and 193; as black pigments: Pigment Black 7, 28, and 26; as white pigment: Pigment White 6, 18, and 21.
The pigment particles need to be small enough in size so that they move freely through the printing device. Because the ejecting nozzles of ink jet ink printers range in diameter from about 10 to 100 microns, pigments suitable for use in the present invention may have a range of particle sizes from about 0.01 microns to 100 microns, preferably from about 0.01 microns to 10 microns, and more preferably from about 0.01 microns to 5 microns.
The amount of colorant present in the ink compositions is from about 0.1 to 30 wt%, preferably from about 0.5

to 10 wt%

Solvents for the ink-jet inks

In the preparation of an ink-jet ink, it is preferred to use water or a mixture of water and a water-soluble organic solvent as a liquid medium to disperse or dissolve the colorant and other ingredients. As the water-soluble organic solvent to be used in the invention, that having a lower vapor pressure than water is preferred.

Suitable water-soluble organic solvents include polyhydric alcohols typified by ethylene glycol, propylene glycol, diethylene glycol, triethylene glycol, polyethylene glycol, thiodiglycol, dithiodiglycol, 1,6-hexanediol, 1,5-pentanediol, isopropanol, butanol,2-methyl-1,3-propanediol, 1,2,6-hexanetriol, acetylene glycol derivatives, glycerine, and trimethylolpropane; lower alkyl ethers of a polyhydric alcohol such as ethylene glycol monomethyl (or ethyl) ether, diethylene glycol monomethyl (or ethyl) ether and triethylene glycol monoethyl (or butyl) ether; heterocycles such as 2-pyrrolidone, N-methyl-2-pyrrolidone, 1,3-dimethyl-2-imidazolidinone and N-ethylmorpholine; sulfur-containing compounds such as sulfolane, dimethylsulfoxide and 3-sulfolane; and polyfunctional compounds such as diacetone alcohol, diethanolamine and triethanolamine.

The content of the water-soluble organic solvent contained in the ink is not specifically limited, but preferably in the range of 0.5 to 50% by weight based on the total ink weight. The water content in the ink is preferably in the range of 50 to 95% by weight based on the total ink weight. It is desirable to use deionized water.

Humectants for the ink-jet inks

The ink-jet ink may contain a humectant to prevent the clogging of the nozzle, due to its ability to slow down the evaporation rate of ink.

Suitable humectants include, for example, triacetin, N-methyl-2-pyrrolidone, glycerol, urea, thiourea, ethylene urea, alkyl urea, alkyl thiourea, dialkyl urea and dialkyl thiourea, diols, including ethanediols, propanediols, propanetriols, butanediols, pentanediols, and hexanediols; glycols, including propylene glycol, polypropylene glycol, ethylene glycol, polyethylene glycol, diethylene glycol, tetraethylene glycol, and mixtures and derivatives thereof. A preferred humectant is polyethylene glycol and added to the ink-jet ink formulation in an amount of 0.1 to 20 wt% of the formulation, more preferably 0.1 to 10 wt% of the formulation, and most preferably approximately 4.0 to 6.0 wt%.

Surfactants for the ink-jet inks

The ink-jet ink may further include a surfactant The surfactant can be anionic, cationic, non-ionic, or zwitterionic and added in a total amount below 20.0 wt% based on the total ink weight.

Suitable surfactants include fatty acid salts, ester salts of a higher alcohol, alkylbenzene sulfonate salts, sulfosuccinate ester salts and phosphate ester salts of a higher alcohol (for example, sodium dodecylbenzenesulfonate and sodium dioctylsulfosuccinate), ethylene oxide adducts of a higher alcohol, ethylene oxide adducts of an alkylphenol, ethylene oxide adducts of a polyhydric alcohol fatty acid ester, and acetylene glycol and ethylene oxide adducts thereof (for example, polyoxyethylene nonylphenyl ether, and Surfynol® 104, 440, 465 and TG available from AIR PRODUCTS & CHEMICALS INC.

Biocides for the ink-jet inks

A biocide may be added to the ink-jet ink to prevent unwanted microbial growth which may occur in the ink-jet ink over time. The biocide may be used either singly or in combination. Each of them is preferably added in an amount of 0.001 to 3 wt. %, more preferably 0.01 to 1.00 wt. %, each based on the ink-jet ink.

Suitable biocides for the ink-jet ink include sodium dehydroacetate, 2-phenoxyethanol, sodium benzoate, sodium pyridinethion-1-oxide, ethyl p-hydroxybenzoate and 1,2-benzisothiazolin-3-one and salts thereof. A preferred biocide for the ink-jet ink of the present invention is Proxel® GXL available from ZENECA COLOURS.

Thickeners for the ink-jet inks

A thickener may be used for viscosity regulation in the ink-jet ink. The thickener is added preferably in an amount of 0.01 to 20wt%, more preferably 0.1 to 10wt% based on the ink-jet ink. The viscosity of the ink-jet ink of the invention is preferably adjusted to 30 mPa.S or less, more preferably 20 mPa.S or less.

Suitable thickeners for use in the ink-jet ink include urea or urea derivatives, hydroxyethylcellulose, carboxymethylcellulose, hydroxypropylcellulose, derivatized chitin, derivatized starch, carrageenan, and pullulan; DNA, proteins, poly (styrenesulfonic acid), poly(styrene-co-maleic anhydride), poly(alkyl vinyl ether-co-maleic anhydride), polyacrylamide,

partially hydrolyzed polyacrylamide, poly(acrylic acid), poly(vinyl alcohol), partially hydrolyzed poly(vinyl acetate), poly (hydroxyethyl acrylate), poly(methyl vinyl ether), polyvinylpyrrolidone, poly(2-vinylpyridine), poly(4-vinylpyridine) and poly(diallyldimethylammonium chloride).

Further stabilizers for the ink-jet inks

Further stabilizers may be incorporated in the ink-jet ink for improving the storage stability of an image.

Suitable stabilizers for use in the ink-jet ink are ultraviolet absorbers, such as benzotriazole compounds as described in **JP-581-85677 A** (KONICA) **JP 61190537 A** (CIBA GEIGY) and **JP 5197075 A** (CIBA GEIGY), benzophenone compounds as described in **JP 5194483** (CIBA GEIGY) and **US 3214463** (DU PONT), cinnamic acid compounds as described in **EP 825485 A** (KODAK), triazine compounds as described in **US 5369140** (CIBA GEIGY), **EP 704437 A** (CIBA GEIGY), **JP 58185677 A** (KONICA) and **JP 61190537 A** (CIBA GEIGY), compounds as described in Research Disclosure No. 24239, and so-called fluorescent brighteners which emit fluorescence, absorbing ultraviolet rays and are, for example, stilbene and benzoxazole compounds.

Another type of suitable stabilizers for use in the ink-jet ink are antioxidants. As the antioxidant for improving storage stability of an image, various organic and metal complex type fading preventives can be used in the invention. Organic fading preventives include hydroquinones, alkoxyphenols, dialkoxyphenols, phenols, anilines, amines, indanes, coumarones, alkoxyanilines and heterocycles, while metal complexes include nickel complexes and zinc complexes. More specifically, compounds as described in "Research Disclosure, No. 17643, VII, Section I or J, No. 15162, No. 18716, left column on page 650, No. 36544, page 527, No. 307105, page 872, and the patent cited in No. 15162, and compounds embraced in the formula of the typical compounds and compound examples described on pages 127 to 137 of **JP 62215272 A** (FUJI).

The stabilizer is preferably added in an amount of 0.1 to 30 wt%, preferably 1 to 10 wt% based on the ink.

Other additives for the ink-jet inks

In addition to the constituents, described above, the ink-jet ink may, if necessary, further contain following additives to have desired performance: pH controlling agent, evaporation accelerators, rust inhibitors, crosslinking agents, soluble electrolytes as conductivity aid, sequestering agents and chelating agents.

Suitable crowlinking agents include imidazole, substituted imidazoles, polyethyleneimines, polyvinylimidazole, polyvinylpyridine, and polyaminosiloxanes.

**Ink-jet recording materials**

Objects of the present invention are realized by an ink-jet recording material containing a non-polymeric compound according to formula (I) :

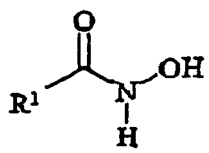

formula (I)

wherein,

$R^1$ is selected from the group consisting of $-CR^2R^3R^4$, $-OCR^5R^6R^7$ and $-NR^8R^9$; $R^2$, $R^3$, $R^5$, $R^6$ and $R^8$ are independently selected from the group consisting of hydrogen, unsubstituted saturated or unsaturated aliphatic groups, saturated or unsaturated aliphatic groups substituted with heteroatoms, a substituted or unsubstituted aromatic or heteroaromatic ring, unsubstituted saturated or unsaturated alicyclic groups and saturated or unsaturated alicyclic groups substituted with heteroatoms; $R^4$, $R^7$ and $R^9$ are independently selected from the group consisting of unsubstituted saturated or unsaturated aliphatic groups, saturated or unsaturated aliphatic groups substituted with heteroatoms, a substituted or unsubstituted aromatic or heteroaromatic ring, unsubstituted saturated or unsaturated alicyclic groups and saturated or unsaturated alicyclic groups substituted with heteroatoms; $R^3$ and $R^4$ may represent the necessary atoms to form a 5- to 8-membered ring; $R^5$ and $R^7$ may represent the necessary atoms to form a 5- to 8-membered ring; and $R^8$ and $R^9$ may represent the necessary atoms to form a 5 to 8 membered ring.

The different layers and particular ingredients of the ink-jet recording material according to the present invention will now be explained in detail.

Supports for the ink-jet recording materials

The support used in the ink-jet recording material of the present invention may be selected from paper type and polymeric type supports. Suitable paper types include standard paper, cast coated paper, polyethylene coated paper and polypropylene coated paper. Suitable polymeric supports include cellulose acetate propionate or cellulose acetate butyrate, polyesters such as polyethylene terephthalate and polyethylene naphthalate, polyamides, polycarbonates, polyimides, polyolefins, poly(vinylacetals), polyvinyl chloride, polyethers and polysulfonamides. Other examples of useful high-quality polymeric supports for the present invention include opaque white polyesters and extrusion blends of polyethylene terephthalate and polypropylene.

Polyester film supports and especially polyethylene terephthalate are preferred for certain applications particularly types with excellent dimensional stability. When such a polyester is used as the support material, a subbing layer may be employed to improve the bonding of the ink-receiving layer to the support. Suitable subbing layers for this purpose are well known in the photographic art and include, for example, polymers of vinylidene chloride such as vinylidene chloride /acrylonitrile /acrylic acid terpolymers or vinylidene chloride /methyl acrylate /itaconic add terpolymers.

Ink-receiving layer and optional auxiliary layers for the ink-jet recording material

The ink-receiving layer of the ink-jet recording material according to the present invention contains a non-polymeric compound according to formula (I) as disclosed above. Such non-polymeric compound according to formula (I) is preferably added to the coating solution of the ink-receiving layer as an aqueous solution. The amount of non-polymeric compound according to formula (I) in the receiving layer is preferably between 0.1 and 3 g/m$^2$. A mixture of two or more non-polymeric compounds according to formula (I) may be used.

The ink-receiving layer may consist of a single layer, or alternatively it may be composed of two layers or even of multiple layers. A particular type of an extra top ink-receiving layer is a so-called "gloss improving layer", meaning a thin layer which achieves a gloss of more than 30 at a 60° angle as measured with a REFO® 60 available from Dr. Bruno Lange GmbH & Co. This gloss property can be achieved by the use of swellable polymers and/or (in)organic fillers with a particle size smaller than 500 nm.

In the case of double or multiple ink-receiving layers the non-polymeric compound according to formula (I) may be incorporated in just one layer, or in several layers or in all layers. It may also be present in additional auxiliary layers on the same side of the support as the ink-receiving layer.

The ink-receiving layer or in at least one of the ink-receiving layers, in the case of multiple layers, according to the present invention, may further contain a filler.

The ink-receiving layer or in at least one of the ink-receiving layers, in the case of multiple layers, according to the present invention, may also further contain a cationic substance acting as mordant.

The ink-receiving layer, and an optional auxiliary layer, such as a backing layer for anti-curl purposes, may further contain well-known conventional ingredients, such as surfactants serving as coating aids, hardening agents, plasticizers, whitening agents and matting agents.

The ink-receiving layer and the optional auxiliary layer(s) may also be crosslinked to provide such desired features as waterfastness and non-blocking characteristics. Crosslinking is also useful in providing abrasion resistance and resistance to the formation of fingerprints on the element as a result of handling.

The different layers can be coated onto the support by any conventional coating technique, such as dip coating, knife coating, extrusion coating, spin coating, slide hopper coating and curtain coating.

Stabilizers for the ink-jet recording materials

The non-polymeric compounds according to the formula (I) as used in the ink-receiving layer of the ink-jet recording material according to the present invention may also be combined with stabilizers including hindered amine light stabilizers (HALS) such as described in **WO 02055618** (CIBA GEIGY), **US 20030235706** (HEWLETT-PACKARD), **EP 1008457 A** (JUJO PAPER), thioethers as described in **EP 1195259 A** (OJI PAPER), **EP 1138509 A** (MITSUBISHI PAPER MILLS & SEIKO EPSON), **DE 10101309** (MITSUBISHI PAPER MILLS) metallic salts or metal complexes as described in **EP 1288007 A** (TOMOEGAWA PAPER), **EP 1231071 A** (ILFORD IMAGING), **EP 1080934 A** (FERRANIA), **US 6344262** (ASAHI GLASS), **EP 1262328 A** (FELIX SCHOELLER JUN FOTO) or UV absorbers as described in **EP 1174279 A** (JUJO PAPER), **US 6641257** (AMERICAN INK JET CORP), **EP 903246 A** (OJI PAPER) or antioxidants such as hydroquinone derivatives e.g. as decribed in **US 6362348** (SEIKO EPSON), **WO 02055617** (CIBA), **WO 20001025350, EP 1029793 A** (HANSHIN KASEI) or specific polymeric binders which give improved light resistance as

described in e.g. **WO 2003054029, EP 1308309 A** (KODAK), **WO 2001096124** other light stabilizers as described in **EP 1239013 A** (HEWLETT PACKARD), **EP 1260379 A** (FUJI), **EP 1193079 A** (HEWLETT PACKARD), **JP 2000094829 A** (KONICA), **EP 1170145** A (KODAK), **EP 1120279 A** (HEWLETT PACKARD) **US 2003134093, US 2003096993** (CIBA) and **JP 2003300378** (FUJI).

Further compounds known to reduce the gas fading or ozone fading may also be incorporated in the ink-receiving layer of the ink-jet recording material or in the ink-jet ink according to the present invention. Suitable light stabilizing agents are described in many patents: **WO 02055618** (CIBA), **US 20030235706** (HEWLETT-PACKARD), **EP 1008457 A** (JUJO PAPER), **EP 1195259 A** (OJI PAPER), **EP 1138509 A** (MITSUBISHI PAPER MILLS & SEIKO EPSON), **DE 10101309, EP 1288007 A** (TOMOEGAWA PAPER) and **EP 1231071 A** (ILFORD IMAGING).

Binders for the ink-jet recording materials

A suitable binder in the ink-receiving layer of the ink-jet recording material according to the present invention is a polyvinylalcohol (PVA), a vinylalcohol copolymer or a modified polyvinyl alcohol. Suitable polyvinylalcohols are e.g. CELVOL 540® available from CELANESE, Poval 117® and Poval 217® available form KURARAY and Gohsenol GH23A® from NIPPON GOHSEI. Most preferably, the polyvinyl alcohol is a cationic type polyvinyl alcohol, such as the cationic polyvinyl alcohol grades from KURARAY, e.g. POVAL CM318® , POVAL C506® , POVAL C118® , and GOHSEFIMER K210® from NIPPON GOHSEI.

Other suitable binders for use in the ink-receiving layer of the ink-jet recording material according to the present invention include: hydroxyethyl cellulose, hydroxypropyl cellulose, hydroxyethylmethyl cellulose, hydroxypropyl methyl cellulose, hydroxybutylmethyl cellulose, methyl cellulose, sodium carboxymethyl cellulose, sodium carboxymethylhydroxethyl cellulose, water soluble ethylhydroxyethyl cellulose, cellulose sulfate, polyvinyl acetate, polyvinyl acetal, polyvinyl pyrrolidone, polyacrylamide, acrylamide/acrylic acid copolymer, polystyrene, styrene copolymers, acrylic or methacrylic polymers, styrene/acrylic copolymers, ethylene-vinylacetate copolymer, vinyl-methyl ether/maleic acid copolymer, poly(2-acrylamido-2-methyl propane sulfonic acid), poly(diethylene triamine-co-adipic acid), polyvinyl pyridine, polyvinyl imidazole, polyethylene imine epichlorohydrin modified, polyethylene imine ethoxylated, polyethylene oxide, polyurethane, melamine resins, gelatin, carrageenan, dextran, gum arabic, casein, pectin, albumin, starch, collagen derivatives, collodion and agar-agar.

Mixtures of two or more binders can also be used in the ink-receiving layer of the ink-jet recording material according to the present invention.

Fillers for the ink-jet recording materials

When a filler is used in an ink-receiving layer of the ink-jet recording material according to the present invention, it is preferably an inorganic filler, which can be chosen from neutral, anionic and cationic filler types. Suitable fillers include e.g. silica, talc, clay, hydrotalcite, kaolin, diatomaceous earth, calcium carbonate, magnesium carbonate, basic magnesium carbonate, aluminosilicate, aluminum trihydroxide, aluminum oxide (alumina), titanium oxide, zinc oxide, barium sulfate, calcium sulfate, zinc sulfide, satin white, alumina hydrate such as boehmite, zirconium oxide or mixed oxides.

Preferably, the filler is a cationic type filler selected from alumina hydrates, aluminum oxides, aluminum hydroxides, aluminum silicates, and cationically modified silicas.

A preferred type of alumina hydrate is crystalline boehmite, or $\Upsilon$-AlO(OH). Suitable types of boehmite include, in powder form, DISPERAL® , DISPERAL® HP14 and DISPERAL® 40 from SASOL, MARTOXIN® VPP2000-2 and GL-3 from MARTINSWERK GmbH.; liquid boehmite alumina systems, e.g. DISPAL® 23N4-20, DISPAL® 14N-25, DISPERAL® AL25 from SASOL. Patents on alumina hydrate include **EP 500021 A** (ASAHI GLASS), **EP 634286 A** (ASAHI GLASS), **US 5624428** (ASAHI GLASS), **EP 742108 A** (ASAHI GLASS), **US 6238047** (ASAHI GLASS), **EP 622244 A** (CANON) and **EP 810101 A** (CANON).

Suitable cationic aluminum oxide (alumina) types for use in the ink-receiving layer of the ink-jet recording material according to the present invention include $\alpha$-$Al_2O_3$ types, such as NORTON® E700, available from SAINT-GOBAIN CERAMICS & PLASTICS INC., and $\Upsilon$-$Al_2O_3$ types, such as ALUMINUM OXID C from DEGUSSA; other aluminum oxide grades, such as BAIKALOX® CR15 and CR30 from BAIKOWSKI CHEMIE; DURALOX® grades and MEDIALOX® grades from BAIKOWSKI CHEMIE, BAIKALOX® CR80, CR140, CR125, B105CR from BAIKOWSKI CHEMIE; CAB-O-SPERSE PG003® available from CABOT, CATALOX® GRADES and CATAPAL® GRADES available from SASOL, such as PLURALOX® HP14/150; colloidal $Al_2O_3$ types, such as ALUMINASOL® 100; ALUMINASOL® 200, ALUMINASOL® 220, ALUMINASOL® 300, and ALUMINASOL® 520 available from NISSAN CHEMICAL INDUSTRIES or NALCO® 8676 available from ONDEO NALCO.

Other suitable cationic inorganic fillers include aluminum trihydroxides such as Bayerite, or $\alpha$-$Al(OH)_3$, such as PLURAL® BT, available from SASOL, and Gibbsite, or $\Upsilon$-$Al(OH)_3$, such as MARTINAL® grades from MARTINSWERK

GmbH, MARTIFIN® grades, such as MARTIFIN® OL104, MARTIFIN® OL 107 and MARTIFIN® OL111 from MARTINSWERK GmbH, MICRAL® grades, such as MICRAL® 1440, MICRAL® 1500; MICRAL® 632; MICRAL® 855; MICRAL® 916; MICRAL® 932; MICRAL® 932CM; MICRAL® 9400 from JM HUBER COMPANY ; HIGILITE® grades, e.g. HIGILITE® H42 or HIGILITE® H43M from SHOWA DENKA K.K..

Another suitable type of cationic filler for use in the ink-receiving layer of in the ink-jet recording material according to the present invention is a zirconium oxide such as NALCO® OOSS008 available from ONDEO NALCO, an acetate stabilized $ZrO_2$ such as ZR20/20, ZR50/20, ZR100/20 and ZRYS4 trademarks from NYACOL NANO TECHNOLOGIES.

Suitable mixed oxides for use in the ink-receiving layer of in the ink-jet recording material according to the present invention include SIRAL grades from SASOL, colloidal metal oxides from NALCO such as NALCO® 1056, NALCO® TX10496, NALCO® TX11678.

Another preferred type of inorganic filler is silica, which can be used as such in its anionic form or after cationic modification. Silica as filler in ink-receiving elements is disclosed in numerous old and recent patents, e.g. **US 4892591** (MIZUSAWA INDUSTRIAL CHEM), **US 4902568** (CANON), **EP 373573 A** (CIBA GEIGY), **EP 423829 A** (OJI PAPER), **EP 487350 A** (XEROX), **EP 493100 A** (SANYO KOKUSAKU PULP) and **EP 514633 A** (SCHOELLER FELIX JUN PAPIER). The silica can be chosen from different types, such as crystalline silica, amorphous silica, precipitated silica, fumed silica, silica gel, spherical and non-spherical silica. The silica may contain minor amounts of metal oxides from the group Al, Zr, Ti.

Suitable types of silica for use in the ink-receiving layer of the ink-jet recording material according to the present invention include AEROSIL® OX50 (BET surface area 50 $\pm$ 15 $m^2/g$, average primary particle size 40 nm, $SiO_2$ content > 99.8%, $Al_2O_3$ content < 0.08%), AEROSIL® MOX170 (BET surface area 170 $m^2/g$, average primary particle size 15 nm, $SiO_2$ content > 98.3%, $Al_2O_3$ content 0.3-1.3%), AEROSIL® MOX80 (BET surface area 80 $\pm$ 20 $m^2/g$, average primary particle size 30 nm, $SiO_2$ content > 98.3%, $Al_2O_3$ content 0.3-1.3%), or other hydrophilic AEROSIL® grades available from DEGUSSA-HÜLS AG, which may give aqueous dispersions with a small average particle size (<500 nm).

Cationically modified silica can be prepared by following methods, without meaning to be limitative :

(1) subjecting silica to a surface treatment with an inorganic cationic compound such as particular metal oxides and oxyhydroxides, e.g. aluminum oxides, and alumina hydrates such as boehmite and pseudo-boehmite; a useful cationic inorganic compound to modify silica is pseudo-boehmite. Pseudo-boehmite is also called boehmite gel and is fine particulate alumina hydrate having a needle form. The composition thereof is generally represented by $Al_2O_3$ . 1.5-2 $H_2O$ and differs from that of crystalline boehmite;
(2) by subjecting silica to a surface treatment with an organic compound having both an amino group or quaternary ammonium group thereof or a quaternary phosphonium group, and a functional group having reactivity to a silanol group on the surface of silica, such as aminoalkoxysilane or aminoalkyl glycidyl ether or isopropanol amine;
(3) by polymerization of a cationic or amino functional monomer in the presence of a silica.

In an alternative embodiment the filler may be chosen from organic particles such as polystyrene, polymethyl methacrylate, silicones, melamine-formaldehyde condensation polymers, urea-formaldehyde condensation polymers, polyesters and polyamides. Mixtures of inorganic and organic fillers can be used. However, most preferably the filler is an inorganic filler.

For obtaining glossy ink-receiving layers the particle size of the filler should preferably be smaller than 500 nm. In order to obtain a porous glossy layer which can serve as an ink-receiving layer for fast ink uptake the filler/binder ratio should be at least 4. Only at these high ratios the binder is no longer able to fill up all pores and voids created by the fillers in the coating. To achieve a sufficient porosity of the coating for fast ink uptake the pore volume of these high filler-content coatings should be higher than 0.1 ml/g of coated solids. This pore volume can be measured by gas adsorption (nitrogen) or by mercury diffusion.

In order to improve dispersibility of the inorganic filler particles, the ink-receiving layer may contain various inorganic salts, and acids or alkalis as pH adjusters.

Cationic mordants for the ink-jet recording materials

A cationic substance acting as mordant may be present in an ink receiving layer of the ink-jet recording material according to present invention. These substances increase the capacity of the layer for fixing and holding the dye of the ink droplets. A particularly preferred substance is a poly(diallyldimethylammonium chloride) or, in short, a poly(DADMAC). These substances are commercially available from several companies, e.g. ALDRICH, NALCO, CIBA, NITTO BOSEKI CO., CLARIANT, BASF and EKA CHEMICALS.

Other suitable cationic substances for use in the ink-receiving layer of the ink-jet recording material according to the present invention include DADMAC copolymers such a copolymers with acrylamide, e.g NALCO® 1470 trade

mark of ONDEO NALCO or PAS-J-81® , available NITTO BOSEKI CO., such as copolymers of DADMAC with acrylates, such as Nalco 8190® , available from ONDEO NALCO; copolymers of DADMAC with $SO_2$, such as PAS-A-1 or PAS-92, trademarks of NITTO BOSEKI CO., copolymer of DADMAC with maleic acid, e.g. PAS-410® available from NITTO BOSEKI CO., copolymer of DADMAC with diallyl(3-chloro-2-hydroxypropyl)amine hydrochloride, e.g. PAS-880® , available NITTO BOSEKI CO., dimethylamine-epichlorohydrine copolymers, e.g. Nalco 7135® , available from ONDEO NALCO or POLYFIX 700, trade name of SHOWA HIGH POLYMER Co.; other POLYFIX grades which could be used are POLYFIX 601, POLYFIX 301, POLYFIX 301A, POLYFIX 250WS, and POLYFIX 3000 ; NEOFIX E-117, trade name of NICCA CHEMICAL CO., a polyoxyalkylene polyamine dicyanodiamine, and REDIFLOC 4150, trade name of EKA CHEMICALS, a polyamine; MADAME (methacrylatedimethylaminoethyl = dimethylaminoethyl methacrylate) or MADQUAT (methacryloxyethyltrimethylammonium chloride) modified polymers, e.g. ROHAGIT KL280, ROHAGIT 210, ROHAGIT SL144, PLEX 4739L, PLEX 3073 from RÖHM, DIAFLOC KP155 and other DIAFLOC products from DIAFLOC COo., and BMB 1305 and other BMB products from EKA CHEMICALS; cationic epichlorohydrin adducts such as POLYCUP 171 and POLYCUP 172, trade names from HERCULES CO.; from Cytec industries : CYPRO products, e.g. CYPRO 514/515/516, SUPERFLOC 507/521/567; cationic acrylic polymers, such as ALCOSTAT 567® , available from CIBA, cationic cellulose derivatives such as CELQUAT L-200, H-100, SC-240C, SC-230M, trade names of STARCH & CHEMICAL CO., and QUATRISOFT LM200, UCARE polymers JR125, JR400, LR400, JR30M, LR30M and UCARE polymer LK; fixing agents from CHUKYO EUROPE : PALSET JK-512, PALSET JK512L, PALSET JK-182, PALSET JK-220, WSC-173, WSC-173L, PALSET JK-320, PALSET JK-320L and PALSET JK-350; polyethyleneimine and copolymers, e.g. LUPASOL, trade name of BASF AG; triethanolaminetitanium-chelate, e.g. TYZOR, trade name of DU PONT CO.; copolymers of vinylpyrrolidone such as VIVIPRINT 111, trade name of ISP, a methacrylamido propyl dimethylamine copolymer; with dimethylaminoethylmethacrylate such as COPOLYMER 845 and COPOLYMER 937, trade names of ISP; with vinylimidazole, e.g. LUVIQUAT CARE, LUVITEC 73W, LUVITEC VPI55 K18P, LUVITEC VP155 K72W, LUVIQUAT FC905, LUVIQUAT FC550, LUVIQUAT HM522, and SOKALAN HP56, all trade names of BASF AG; polyamidoamines, e.g. RETAMINOL and NADAVIN, trade marks of BAYER AG; phosphonium compounds such as disclosed in EP 609930 and other cationic polymers such as NEOFIX RD-5® , available from NICCA CHEMICAL CO..

Surfactants for the ink-jet recording materials

Surfactants may be incorporated in the ink-jet recording material according to the present invention. They can be any of the cationic, anionic, amphoteric, and non-ionic surfactants disclosed in **JP 62280068 A** (CANON)

Suitable surfactants for use in the ink-jet recording material according to the present invention include N-alkylamino acid salts, alkylether carboxylic acid salts, acylated peptides, alkylsulfonic acid salts, alkylbenzene and alkylnaphthalene sulfonic acid salts, sulfosuccinic acid salts, a-olefin sulfonic acid salts, N-acylsulfonic acid salts, sulfonated oils, alkylsulfonic acid salts, alkylether sulfonic acid salts, alkylallylethersulfonic acid salts, alkylamidesulfonic acid salts, alkylphosphoric acid salts, alkyletherphosphoric acid salts, alkylallyletherphosphoric acid salts, alkyl and alkylallylpolyoxyethylene ethers, alkylallylform-aldehyde condensed acid salts, alkylallylethersulfonic acid salts, alkylamide-sulfonic acid salts, alkylphosphoric acid salts, alkyletherphosphoric acid salts, alkylallyletherphosphoric acid salts, alkyl and alkylallylpolyoxyethylene ethers, alkylallyl-formaldehyde condensed polyoxyethylene ethers, blocked polymers having polyoxypropylene, polyoxyethylene polyoxypropylalkylethers, polyoxyethyleneether of glycolesters, polyoxyethylene-ether of sorbitanesters, polyoxyethyleneether of sorbitolesters, poly-ethyleneglycol aliphatic acid esters, glycerol esters, sorbitane esters, propyleneglycol esters, sugaresters, fluoro $C_2$-$C_{10}$ alkyl-carboxylic acids, disodium N-perfluorooctanesul-fonyl glutamate, sodium 3-(fluoro-$C_6$-$C_{11}$-alkyl-oxy)-1-$C_3$-$C_4$ alkyl sulfonates, sodium 3-(ω-fluoro-$C_6$-$C_8$alkanoyl-N-ethylamino)-1-propane sulfonates, N-[3-(perfluorooctanesulfonamide)-propyl]-N,N-dimethyl-N-carboxy-methylene ammonium betaine, fluoro-$C_{11}$-$C_{20}$ alkylcarboxylic acids, perfluoro-$C_7$-$C_{13}$-alkyl-carboxylic acids, perfluorooctane sulfonic acid diethanolamide, Li, K and Na perfluoro-$C_{4}$-$C_{12}$-alkyl sulfonates, N-propyl-N-(2-hydroxyethyl) per-fluorooctane sulfonamide, perfluoro-$C_6$-$C_{10}$-alkylsulfonamide-propyl-sulfonyl-glycinates, bis-(N-perfluorooctylsulfonyl-N-ethanolamino-ethyl)phosphonate, monoperfluoro $C_6$-$C_{16}$ alkyl-ethyl phosphonates and perfluoroalkyl-betaine.

Suitable cationic surfactants for use in the ink-jet recording material according to the present invention include N-alkyl dimethyl ammonium chloride, palmityl trimethyl ammonium chloride, dodecyldimethyl-amine, tetradecyldimethylamine, ethoxylated alkyl guanidine-amine complex, oleamine hydroxypropyl bistrimonium chloride, oleyl imidazoline, stearyl imidazoline, cocamine acetate, palmitamine, dihydroxyethylcocamine, cocotrimonium chloride, alkyl polyglycolether ammonium sulphate, ethoxylated oleamine, lauryl pyridinium chloride, N-oleyl-1,3-diaminopropane, stearamidopropyl dimethylamine lactate, coconut fatty amide, oleyl hydroxyethyl imidazoline, isostearyl ethylimidonium ethosulphate, lauramidopropyl PEG-dimoniumchloride phosphate, palmityl trimethylammonium chloride, and cetyltrimethylammonium bromide.

Especially suitable surfactants for use in the ink-jet recording material according to the present invention are the fluorocarbon surfactants as described in e.g. **US 4781985** (JAMES RIVER GRAPHICS) having a structure of: $F(CF_2)_{4-9}CH_2CH_2SCH_2CH_2N^+ R_3X^-$ wherein R is a hydrogen or an alkyl group; and in **US 5084340** (KODAK) having a

structure of: $CF_3(CF_2)_mCH_2CH_2O(CH_2CH_2O)_nR$ wherein m = 2 to 10; n = 1 to 18; R is hydrogen or an alkyl group of 1 to 10 carbon atoms. These surfactants are commercially available from DuPont and 3M. The concentration of the surfactant component in the ink-receiving layer is typically in the range of 0.1 to 2 %, preferably in the range of 0.4 to 1.5 % and is most preferably 0.75 % by weight based on the total dry weight of the layer.

Crosslinking agents for the ink-jet recording materials

The ink-jet recording material according to the present invention may also contain a crosslinking agent. Crosslinking agents - also known as hardening agents or hardeners - will crosslink film forming binders. Hardening agents can be used in free or in blocked form. The crosslinking agent may be used alone or in combination with two or more other crosslinking agents. A combination of organic and inorganic crosslinking agents may be used.

Suitable crosslinking agents for use in the ink-jet recording material according to the present invention include formaldehyde and free dialdehydes, such as succinaldehyde and glutaraldehyde, blocked dialdehydes, active esters, sulfonate esters, active halogen compounds, isocyanate or blocked isocyanates, polyfunctional isocyanates, melamine derivatives, s-triazines and diazines, epoxides, active olefins having two or more active bonds, carbodiimides, zirconium complexes, e.g. BACOTE® 20, ZIRMEL® 1000 or zirconium acetate® , available from MEL CHEMICALS, titanium complexes, such as TYZOR® grades from DUPONT, isoxazolium salts subsituted in the 3-position, esters of 2-alkoxy-N-carboxy-dihydroquinoline, N-carbamoylpyridinium salts, hardeners of mixed function, such as halogen-substituted aldehyde acids (e.g. mucochloric and mucobromic acids), onium substituted acroleins and vinyl sulfones and polymeric hardeners, such as dialdehyde starches and copoly(acroleinmeth-acrylic acid), and oxazoline functional polymers, e.g. EPOCROS® WS-500, and EPOCROS® K-1000 series available from NIPPON SHOKUBAI CO, and maleic anhydride copolymers, e.g. GANTREZ® AN119 available from INTERNATIONAL SPECIALTY PRODUCTS.

In the practice of this invention boric acid is a preferred crosslinker.

The solvent, which constitutes the main portion of the crosslinking agent solution, is generally water, and may be an aqueous mixed solvent containing an organic solvent miscible with water.

As organic solvent, any solvent wherein the crosslinking agent can be dissolved may be used. Examples thereof include alcohols such as methanol, ethanol, isopropyl alcohol, and glycerin; ketones such as acetone and methyl ethyl ketone; esters such as methyl acetate and ethyl acetate; aromatic solvents such as toluene; ethers such as tetrahydrofuran; and halogenated hydrocarbon solvents such as dichloromethane.

The crosslinking agent is preferably supplied at the same time as the coating solution for forming the ink-receiving layer of the ink-jet recording material according to the present invention is applied. The crosslinking agent may have been previously added to the coating solution, or may be added just before coating. Furthermore, the crosslinking agent may also be supplied by using a second coating solution coated on top of the ink-receiving layer, but preferably this second coating solution is coated before the ink-receiving layer is coated. Cracks generated during drying of the ink-receiving layer can thereby be reduced.

Plasticizers for the ink-jet recording materials

The ink-jet recording material according to the present invention may also comprise a plasticizer such as ethylene glycol, diethylene glycol, glycerol, 1,6-hexanediol, propylene glycol, polyethylene glycol, glycerol monomethylether, glycerol monochlorohydrin, ethylene carbonate, propylene carbonate, urea phosphate, triphenylphosphate, glycerolmonostearate, propylene glycol monostearate, tetramethylene sulfone, n-methyl-2-pyrrolidone, n-vinyl-2-pyrrolidone.

## Industrial applicability

The ink-jet recording material according to the present invention can, for example, be used in ink-jet printing applications such as poster printing and printing of digitally recorded photographic images.

The present invention will now be described in detail by way of Examples hereinafter. However the invention is not limited to these examples.

## EXAMPLES

### Measurement methods

1. Optical density

The optical density was measured using a MacBeth TR1224 densitometer with a visual filter.

2. Measurement of light-fastness

The light-fastness was evaluated by measuring the optical density of the printed samples before and after being exposed to light in a fade-o-meter, XENOTEST 150 (trademark: Original Hanau) with 180 kLux during 16 hours.

The relative optical density loss (%) is calculated using the following equation:

$$\text{relative optical density loss (\%)} = \frac{OD_o - OD}{OD_o} \times 100\%$$

wherein $OD_o$ is the optical density before light-exposure and OD is the optical density after light-exposure.

**Preparation of the coating solution**

To apply the image stabilizer to ink-jet recording material, a coating solution was prepared by adding an aqueous solution (between 2 to 10% by weight) of the image-stabilizing compounds to 170 parts of water.

**Coating and evaluation of the coated samples**

The coating solutions were applied to a glossy porous medium (Agfajet Universal Instant Dry Photograde Paper Glossy available from AGFA-GEVAERT) to provide the invention samples INV-1 to INV-7. The concentration of the non-polymeric compound according to formula (I) was varied by varying the thickness of the applied coating solution such that a dry coating weight of 0.5 $g/m^2$ of the image stabilizer was obtained. The application was performed by means of a doctor blade coater. The comparative sample COMP-1 was obtained by simply applying water to the glossy porous medium. The samples COMP-1 and INV-1 to INV-7 were allowed to dry at room temperature for 24 hours.

Color patches with 50% and 100% ink of cyan, magenta, yellow and black were printed by means of a printer HP970Cxi (trademark of Hewlett-Packard) on all samples. The black patches were obtained by printing cyan, magenta and yellow.

The samples COMP-1 and INV-1 to INV-7 were then evaluated for light-fastness. The results are summarized in Table 4.

**Table 4**

| Sample | Image Stabilizer (0.5 $g/m^2$) | Relative optical density loss (%) | | | |
|---|---|---|---|---|---|
| | | Yellow | Magenta | Cyan | Black |
| COMP-1 | none | 4.6 | 31.2 | 55.5 | 26.5 |
| INV-1 | SN-1 | 0.0 | 3.9 | 36.8 | 13.6 |
| INV-2 | SC-1 | 0.0 | 19.2 | 49.6 | 25.1 |
| INV-3 | SC-2 | 3.7 | 18.6 | 41.4 | 23.7 |
| INV-4 | SC-3 | 0.0 | 20.4 | 37.1 | 24.5 |
| INV-5 | SN-2 | 0.0 | 3.0 | 33.9 | 13.6 |
| INV-6 | SN-5 | 0.0 | 15.8 | 34.5 | 0.0 |
| INV-7 | SN-6 | 2.7 | 10.5 | 31.4 | 0.5 |

As can be seen from Table 4, the inventive samples INV-1 to INV-7 exhibit an important improvement in light-fastness when compared to the comparative sample COMP-1.

## Claims

1. An ink-jet recording material comprising a support and at least one ink-receiving layer containing at least one non-polymeric compound according to formula (I):

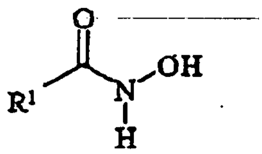

formula (I) .

wherein,

$R^1$ is selected from the group consisting of $-CR^2R^3R^4$, $-OCR^5R^6R^7$ and $-NR^8R^9$, $R^2$, $R^3$, $R^5$, $R^6$ and $R^8$ are independently selected from the group consisting of hydrogen, unsubstituted saturated or unsaturated aliphatic groups, saturated or unsaturated aliphatic groups substituted with heteroatoms, a substituted or unsubstituted aromatic or heteroaromatic ring, unsubstituted saturated or unsaturated alicyclic groups and saturated or unsaturated alicyclic groups substituted with heteroatoms;
$R^4$, $R^7$ and $R^9$ are independently selected from the group consisting of unsubstituted saturated or unsaturated aliphatic groups, saturated or unsaturated aliphatic groups substituted with heteroatoms, a substituted or unsubstituted aromatic or heteroaromatic ring, unsubstituted saturated or unsaturated alicyclic groups and saturated or unsaturated alicyclic groups substituted with heteroatoms;
$R^3$ and $R^4$ may represent the necessary atoms to form a 5- to 8-membered ring,
$R^5$ and $R^7$ may represent the necessary atoms to form a 5- to 8-membered ring, and
$R^8$ and $R^9$ may represent the necessary atoms to form a 5- to 8-membered ring.

2. An ink-jet recording material according to claim 1 wherein said recording material further comprises a filler in said at least one ink-receiving layer.

3. An ink-jet recording material according to claim 2 wherein said filler is an inorganic filler.

4. An ink-jet recording material according to claim 3 wherein said inorganic filler is selected from the group consisting of silica, alumina, alumina hydrate, and aluminum trihydroxide.

5. An ink-jet recording material according to any of claims 1 to 4 wherein the binder of the at least one ink-receiving layer is a hydrophilic binder.

6. An ink-jet recording material according to claim 5 wherein said hydrophilic binder is a polyvinyl alcohol.

7. Ink-jet recording material according to any of claims 1 to 6, wherein said non-polymeric compound according to formula (I) is selected from the group consisting of

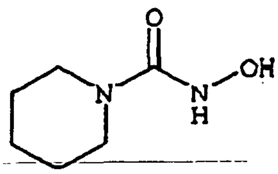 , 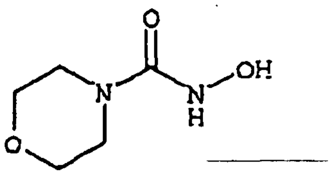 ,

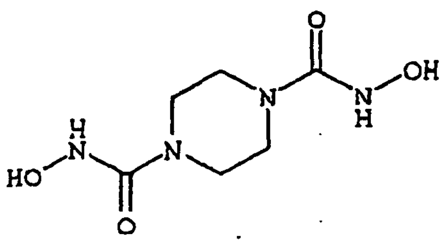 , 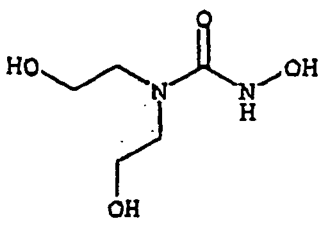 ,

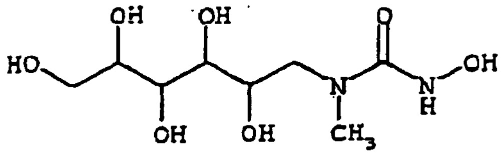
,
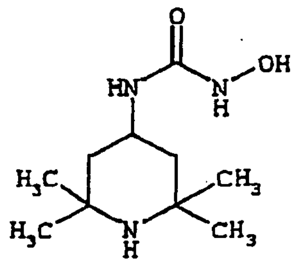
,

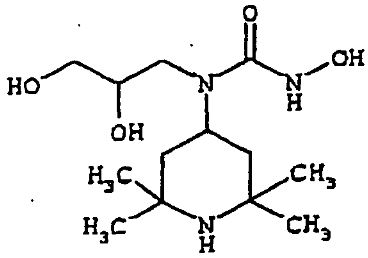
,
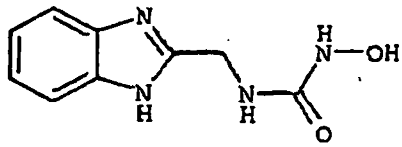
,

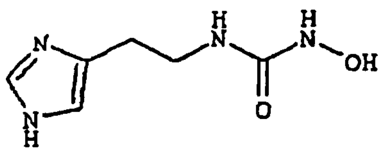
,
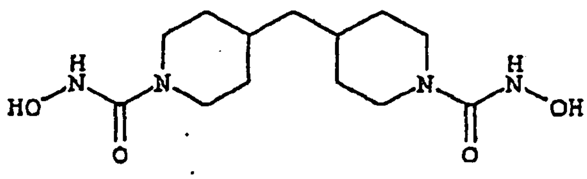
,

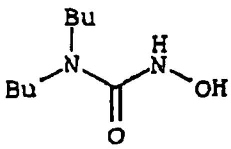
,
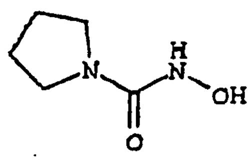
,
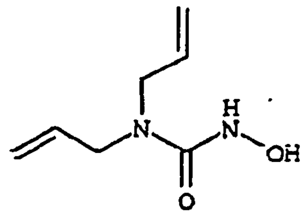
,

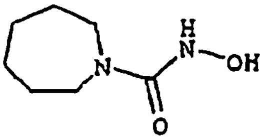
,
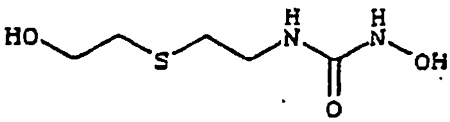
,
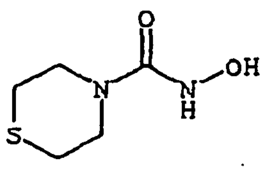
,

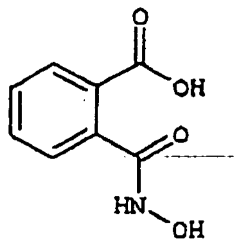
,
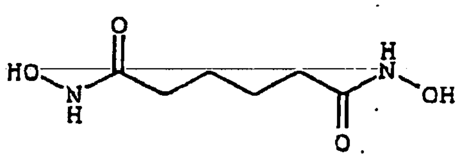
,

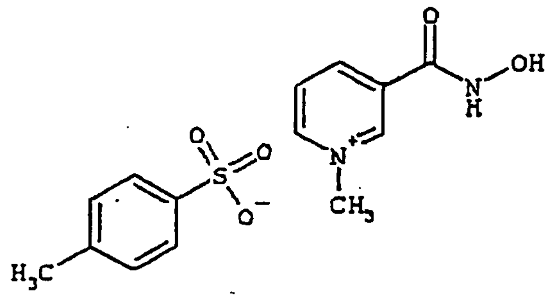

,

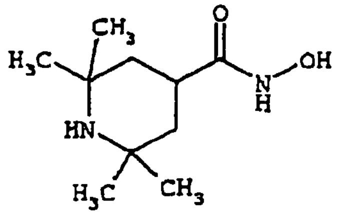

,

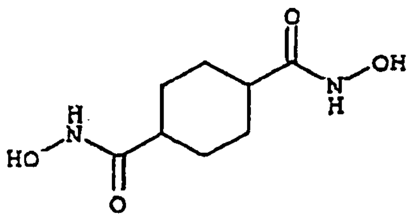

,

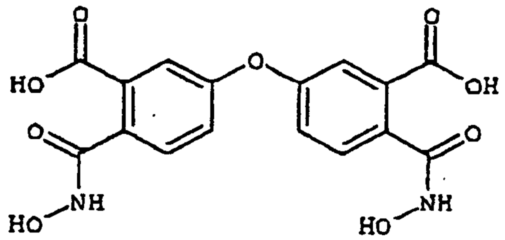

,

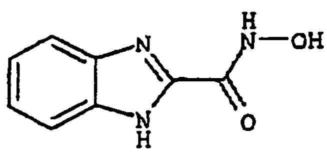

,

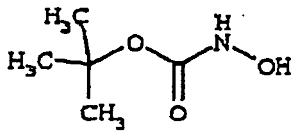

,

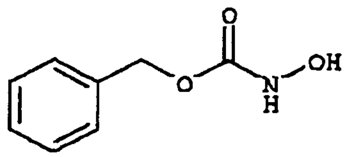

and

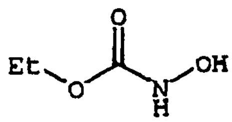

.

**8.** Use of a non-polymeric compound according to formula (I) :

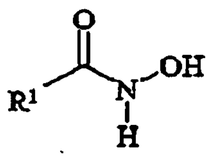

**formula (I)**

wherein,

$R^1$ is selected from the group consisting of $-CR^2R^3R^4$, $-OCR^5R^6R^7$ and $-NR^8R^9$, $R^2$, $R^3$, $R^5$, $R^6$ and $R^8$ are independently selected from the group consisting of hydrogen, unsubstituted saturated or unsaturated aliphatic groups, saturated or unsaturated aliphatic groups substituted with heteroatoms, a substituted or unsubstituted aromatic or heteroaromatic ring, unsubstituted saturated or unsaturated alicyclic groups and saturated or unsaturated alicyclic groups substituted with heteroatoms;

$R^4$, $R^7$ and $R^9$ are independently selected from the group consisting of unsubstituted saturated or unsaturated aliphatic groups, saturated or unsaturated aliphatic groups substituted with heteroatoms, a substituted or unsubstituted aromatic or heteroaromatic ring, unsubstituted saturated or unsaturated alicyclic groups and saturated or unsaturated alicyclic groups substituted with heteroatoms;

$R^3$ and $R^4$ may represent the necessary atoms to form a 5- to 8-membered ring,
$R^5$ and $R^7$ may represent the necessary atoms to form a 5- to 8-membered ring, and
$R^8$ and $R^9$ may represent the necessary atoms to form a 5- to 8-membered ring; in an ink-jet recording material or a liquid for coating on an ink-jet image.

9. Use according to claim 8, wherein said non-polymeric compound according to formula (I) is selected from the group consisting of

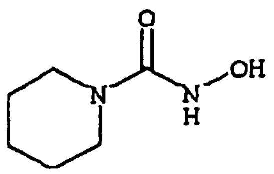
,
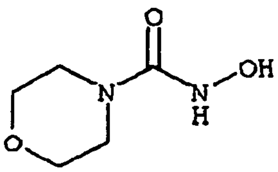
,
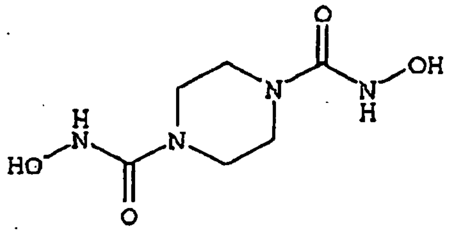
,
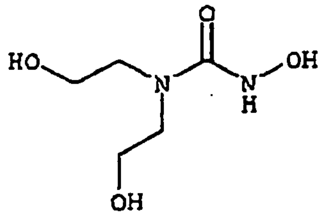
,
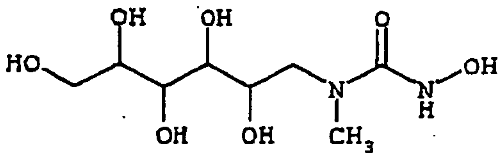
,
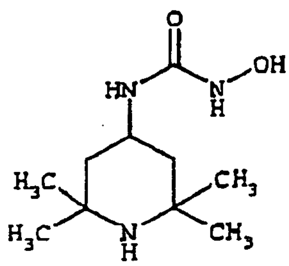
,
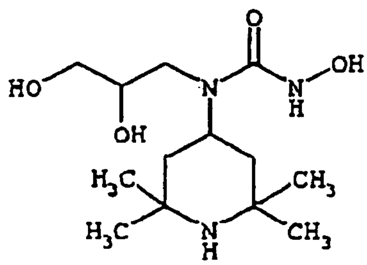
,
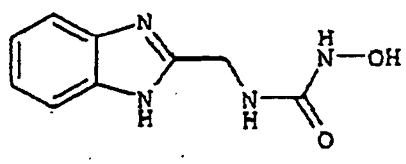
,
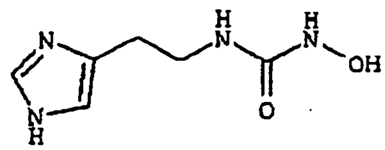
,
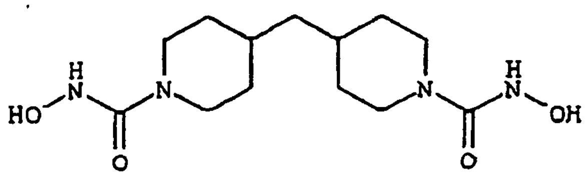
,
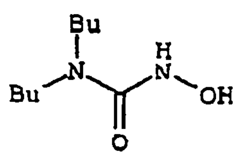
,

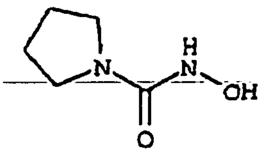 , 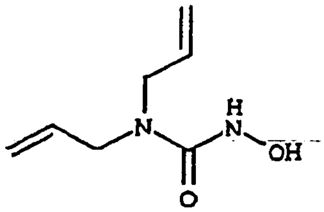 , 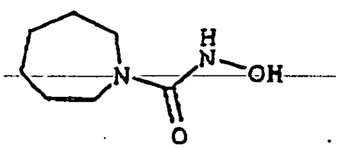 ,

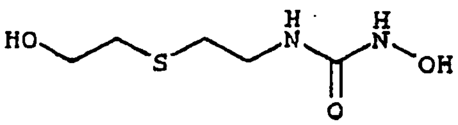 , 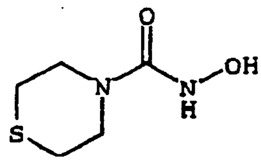 , 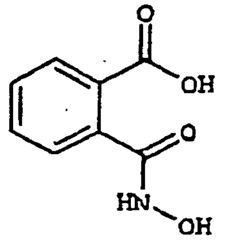 ,

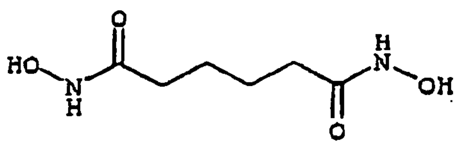 , 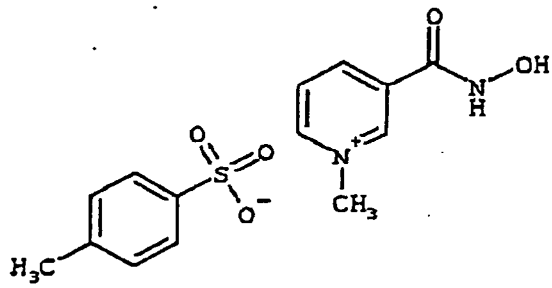 ,

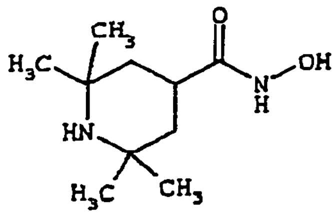 , 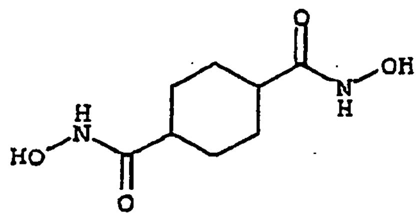 ,

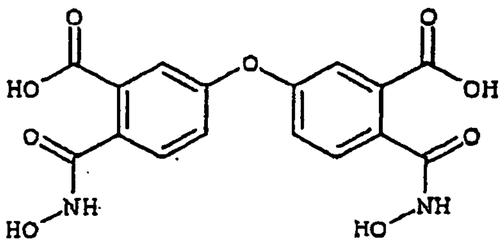 , 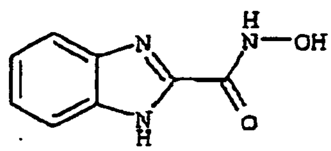 ,

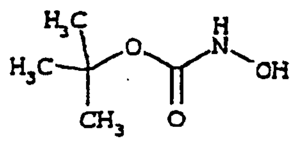 , 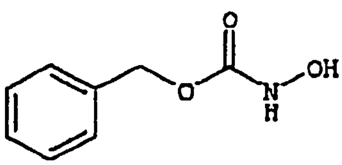 and 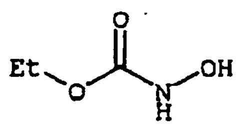 .

**10.** A method for stabilizing an image on an ink-jet recording material according any of claims 1 to 7, comprising the

steps of:

(1) preparing a coating solution comprising at least one compound according to formula (I), and
(2) coating said coating solution onto a support, an ink-receiving layer or an ink-jet image.

## Patentansprüche

1. Ein Tintenstrahlaufzeichnungsmaterial mit einem Träger und zumindest einer Drucktinte aufnehmenden Schicht, enthaltend zumindest eine nicht-polymere Verbindung der Formel (I) :

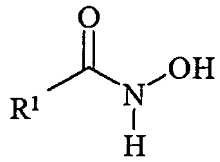

Formel (I)

in der :

$R^1$ eine $-CR^2R^3R^4$-Gruppe, $-OCR^5R^6R^7$-Gruppe oder $-NR^8R^9$-Gruppe bedeutet,
$R^2$, $R^3$, $R^5$, $R^6$ und $R^8$ unabhängig voneinander ein Wasserstoffatom, eine nicht-substituierte gesättigte oder ungesättigte alifatische Gruppe, eine mit Heteroatomen substituierte gesättigte oder ungesättigte alifatische Gruppe, einen substituierten oder nichtsubstituierten aromatischen oder heteroaromatischen Ring, eine nicht-substituierte gesättigte oder ungesättigte alicyclische Gruppe oder eine mit Heteroatomen substituierte gesättigte oder ungesättigte alicyclische Gruppe bedeuten,
$R^4$, $R^7$ und $R^9$ unabhängig voneinander eine nicht-substituierte gesättigte oder ungesättigte alifatische Gruppe, eine mit Heteroatomen substituierte gesättigte oder ungesättigte alifatische Gruppe, einen substituierten oder nichtsubstituierten aromatischen oder heteroaromatischen Ring, eine nicht-substituierte gesättigte oder ungesättigte alicyclische Gruppe oder eine mit Heteroatomen substituierte gesättigte oder ungesättigte alicyclische Gruppe bedeuten,
$R^3$ und $R^4$ die zur Bildung eines 5-gliedrigen bis 8-gliedrigen Ringes benötigten Atome bedeuten können,
$R^5$ und $R^7$ die zur Bildung eines 5-gliedrigen bis 8-gliedrigen Ringes benötigten Atome bedeuten können und
$R^8$ und $R^9$ die zur Bildung eines 5-gliedrigen bis 8-gliedrigen Ringes benötigten Atome bedeuten können.

2. Tintenstrahlaufzeichnungsmaterial nach Anspruch 1, **dadurch gekennzeichnet, dass** das Aufzeichnungsmaterial in der zumindest einen Drucktinte aufnehmenden Schicht ferner einen Füllstoff enthält.

3. Tintenstrahlaufzeichnungsmaterial nach Anspruch 2, **dadurch gekennzeichnet, dass** der Füllstoff ein anorganischer Füllstoff ist.

4. Tintenstrahlaufzeichnungsmaterial nach Anspruch 3, **dadurch gekennzeichnet, dass** der anorganische Füllstoff Kieselsäure, Tonerde, Aluminiumhydroxid oder Aluminiumtrihydroxid ist.

5. Tintenstrahlaufzeichnungsmaterial nach einem der Ansprüche 1 bis 4, **dadurch gekennzeichnet, dass** das Bindemittel in der zumindest einen Drucktinte aufnehmenden Schicht ein hydrophiles Bindemittel ist.

6. Tintenstrahlaufzeichnungsmaterial nach Anspruch 5, **dadurch gekennzeichnet, dass** das hydrophile Bindemittel ein Polyvinylalkohol ist.

7. Tintenstrahlaufzeichnungsmaterial nach einem der Ansprüche 1 bis 6, **dadurch gekennzeichnet, dass** die nicht-polymere Verbindung der Formel (I) aus der Gruppe bestehend aus

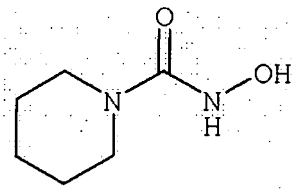,
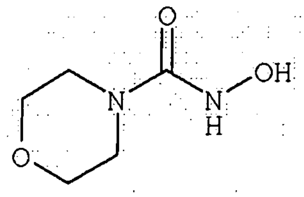,

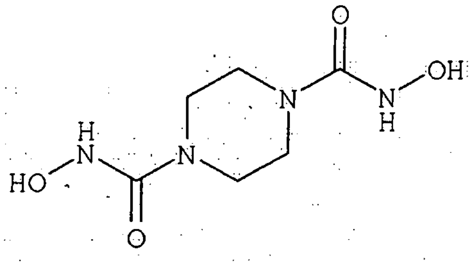,
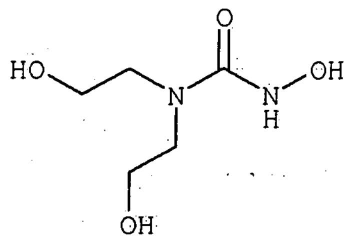,

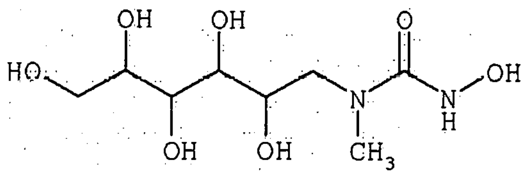,
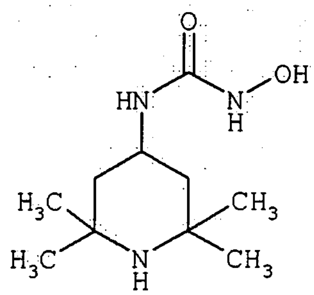,

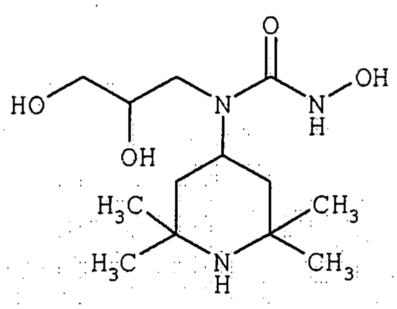,
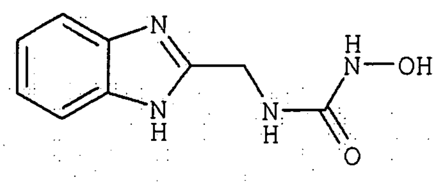,

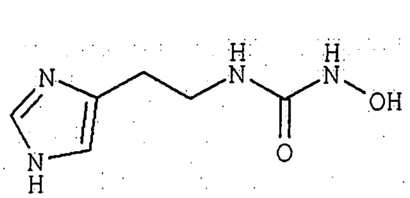,
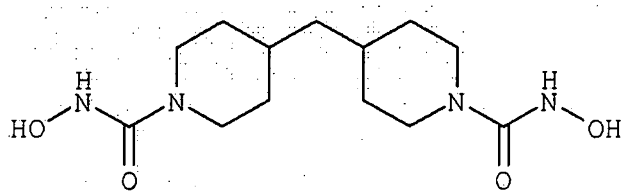,

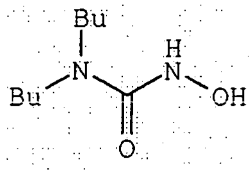 , 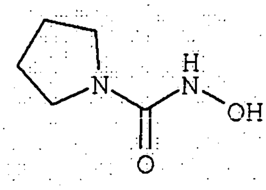 , 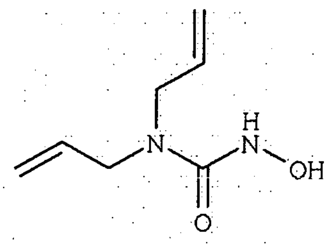 ,

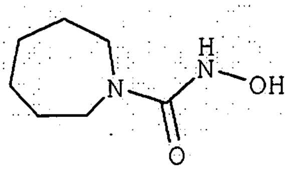 , 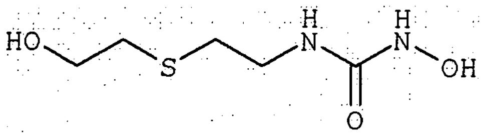 ,

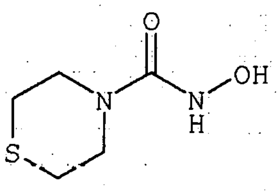 , 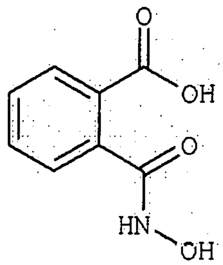 , 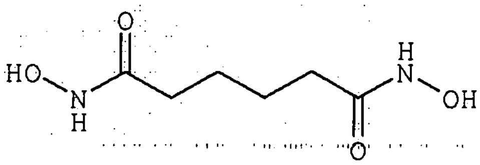 ,

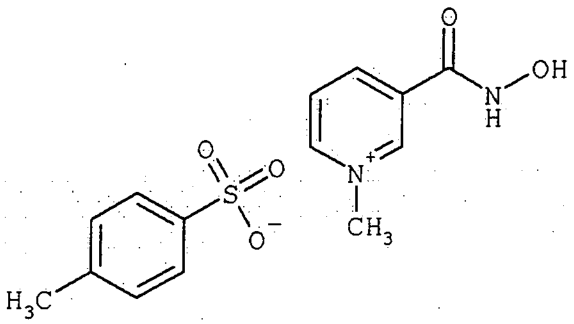 , 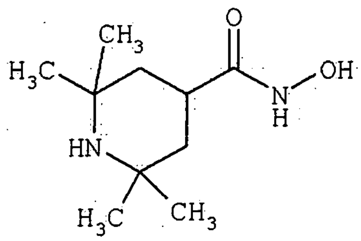 ,

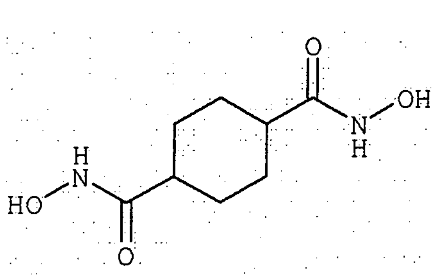 , 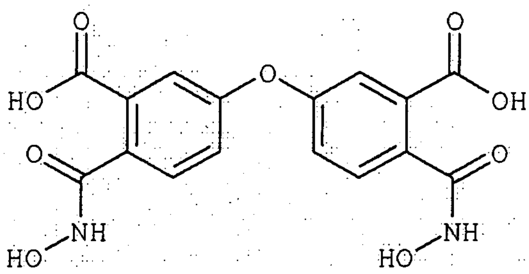 ,

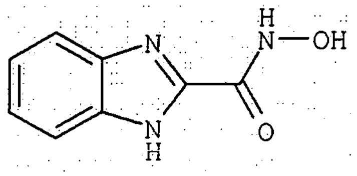, 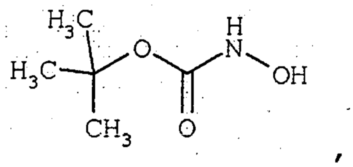,

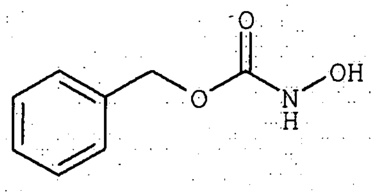 und 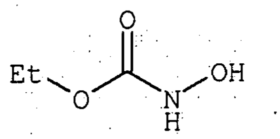.

gewählt wird.

**8.** Verwendung einer nicht-polymeren Verbindung der Formel (I) :

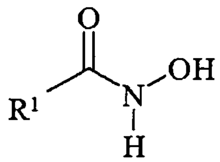

Formel (I)

in der :

$R^1$ eine $-CR^2R^3R^4$-Gruppe, $-OCR^5R^6R^7$-Gruppe oder $-NR^8R^9$-Gruppe bedeutet,
$R^2$, $R^3$, $R^5$, $R^6$ und $R^8$ unabhängig voneinander ein Wasserstoffatom, eine nicht-substituierte gesättigte oder ungesättigte alifatische Gruppe, eine mit Heteroatomen substituierte gesättigte oder ungesättigte alifatische Gruppe, einen substituierten oder nichtsubstituierten aromatischen oder heteroaromatischen Ring, eine nicht-substituierte gesättigte oder ungesättigte alicyclische Gruppe oder eine mit Heteroatomen substituierte gesättigte oder ungesättigte alicyclische Gruppe bedeuten,
$R^4$, $R^7$ und $R^9$ unabhängig voneinander eine nicht-substituierte gesättigte oder ungesättigte alifatische Gruppe, eine mit Heteroatomen substituierte gesättigte oder ungesättigte alifatische Gruppe, einen substituierten oder nichtsubstituierten aromatischen oder heteroaromatischen Ring, eine nicht-substituierte gesättigte oder ungesättigte alicyclische Gruppe oder eine mit Heteroatomen substituierte gesättigte oder ungesättigte alicyclische Gruppe bedeuten,
$R^3$ und $R^4$ die zur Bildung eines 5-gliedrigen bis 8-gliedrigen Ringes benötigten Atome bedeuten können,
$R^5$ und $R^7$ die zur Bildung eines 5-gliedrigen bis 8-gliedrigen Ringes benötigten Atome bedeuten können und
$R^8$ und $R^9$ die zur Bildung eines 5-gliedrigen bis 8-gliedrigen Ringes benötigten Atome bedeuten können,
in einem Tintenstrahlaufzeichnungsmaterial oder einer zum Beschichten eines Tintenstrahlbildes benutzten Flüssigkeit.

**9.** Verwendung nach Anspruch 8, **dadurch gekennzeichnet, dass** die nicht-polymere Verbindung der Formel (I) aus folgender Gruppe gewählt wird :

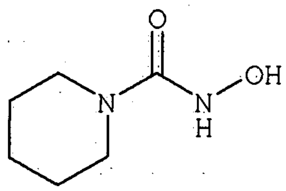 ,

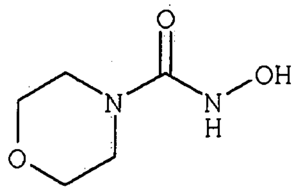 ,

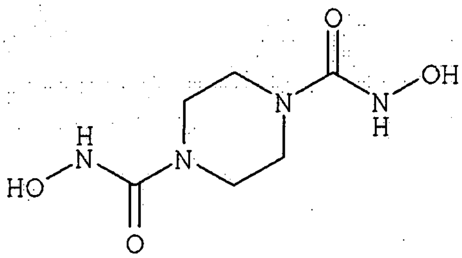 ,

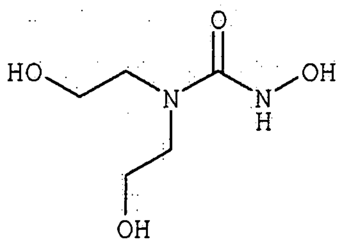 ,

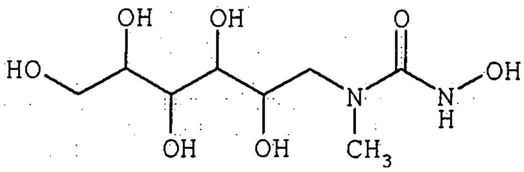 ,

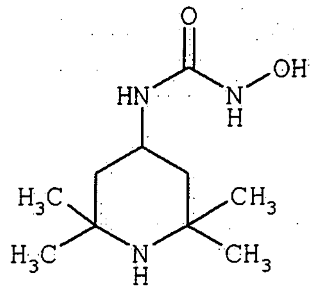 ,

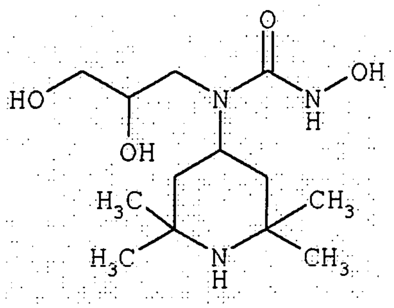 ,

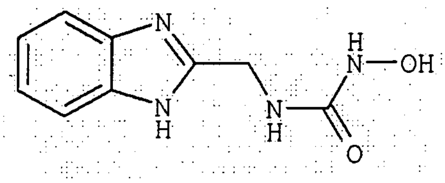 ,

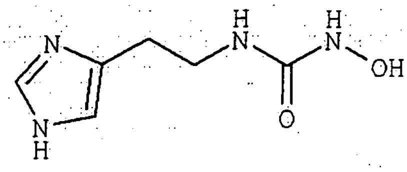 ,

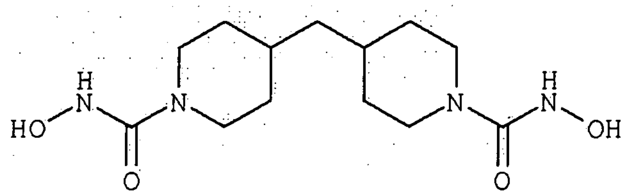 ,

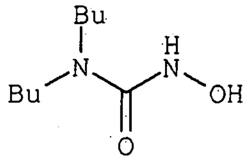,
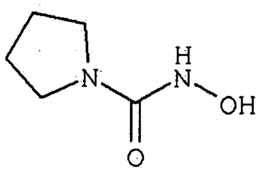,
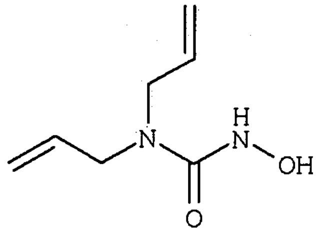,

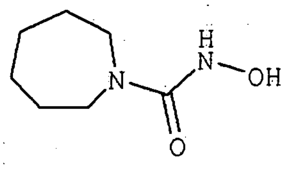,
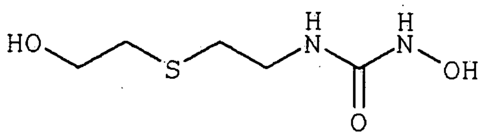,

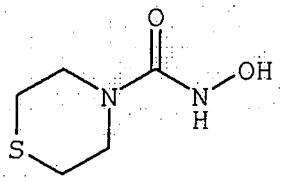,
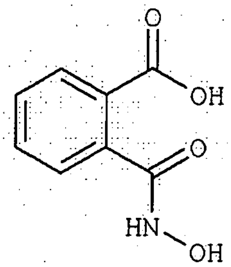,
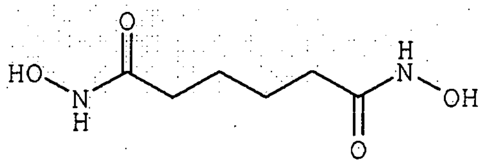,

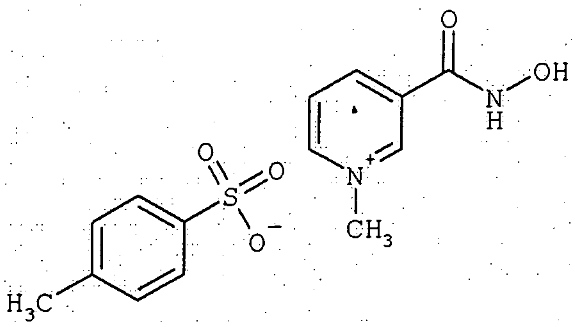,
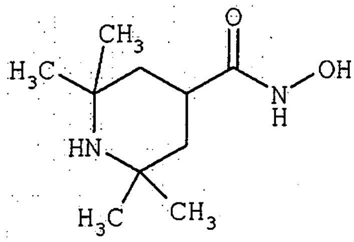,

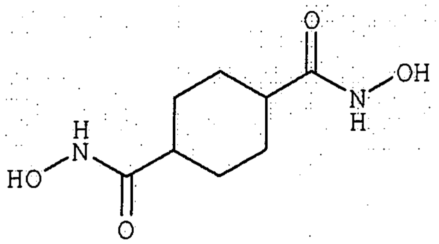,
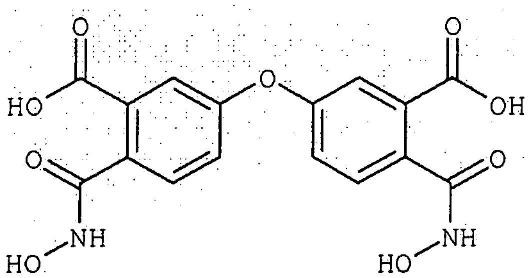,

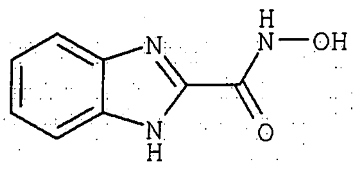 , 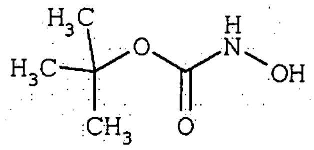 ,

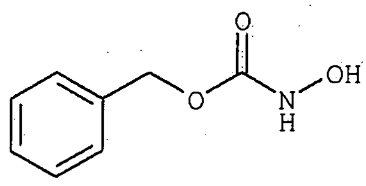 und 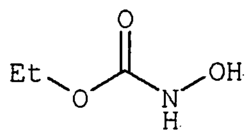 .

**10.** Ein durch die nachstehenden Schritte **gekennzeichnet**es Verfahren zum Stabilisieren eines auf einem Tintenstrahlaufzeichnungsmaterial nach einem der Ansprüche 1 bis 7 befindlichen Bildes :

(1) Anfertigung einer Beschichtungslösung, die zumindest eine Verbindung der Formel (I) enthält, und
(2) Auftrag der Beschichtungslösung auf einen Träger, eine Drucktinte aufnehmende Schicht oder ein Tintenstrahlbild.

## Revendications

**1.** Matériau d'enregistrement pour jet d'encre comprenant un support et au moins une couche de réception d'encre contenant au moins un composé non polymère répondant à la formule (I) :

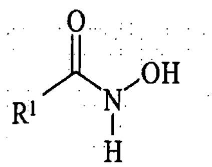

dans laquelle

$R^1$ est choisi parmi le groupe constitué par un groupe $-CR^2R^3R^4$, un groupe $-OCR^5R^6R^7$ et un groupe $-NR^8R^9$,
$R^2$, $R^3$, $R^5$, $R^6$ et $R^8$ sont choisis, indépendamment les uns des autres, parmi le groupe constitué par un atome d'hydrogène, des groupes aliphatiques non substitués saturés ou insaturés, des groupes aliphatiques saturés ou insaturés substitués avec des hétéroatomes, un noyau aromatique ou hétéroaromatique substitué ou non substitué, des groupes alicycliques non substitués, saturés ou insaturés et des groupes alicycliques saturés ou insaturés, substitués avec des hétéroatomes ;
$R^4$, $R^7$ et $R^9$ sont choisis, indépendamment les uns des autres, parmi le groupe constitué par des groupes aliphatiques non substitués saturés ou insaturés, des groupes aliphatiques saturés ou insaturés substitués avec des hétéroatomes, un noyau aromatique ou hétéroaromatique substitué ou non substitué, des groupes alicycliques non substitués, saturés ou insaturés et des groupes alicycliques saturés ou insaturés, substitués avec des hétéroatomes ;
$R^3$ et $R^4$ peuvent représenter les atomes nécessaires pour former un noyau pentagonal à octogonal ;
$R^5$ et $R^7$ peuvent représenter les atomes nécessaires pour former un noyau pentagonal à octogonal ; et
$R^8$ et $R^9$ peuvent représenter les atomes nécessaires pour former un noyau pentagonal à octogonal.

**2.** Matériau d'enregistrement pour jet d'encre selon la revendication 1, dans lequel ledit matériau d'enregistrement comprend en outre une matière de charge dans ladite au moins une couche de réception d'encre.

**3.** Matériau d'enregistrement pour jet d'encre selon la revendication 2, dans lequel ladite matière de charge est une matière de charge inorganique.

**4.** Matériau d'enregistrement pour jet d'encre selon la revendication 3, dans lequel ladite matière de charge inorganique est choisie parmi le groupe constitué par la silice, l'alumine, l'hydrate d'alumine et le trihydroxyde d'aluminium.

**5.** Matériau d'enregistrement pour jet d'encre selon l'une quelconque des revendications 1 à 4, dans lequel le liant de ladite au moins une couche de réception d'encre est un liant hydrophile.

**6.** Matériau d'enregistrement pour jet d'encre selon la revendication 5, dans lequel ledit liant hydrophile est un alcool polyvinylique.

**7.** Matériau d'enregistrement pour jet d'encre selon l'une quelconque des revendications 1 à 6, dans lequel ledit composé non polymère répondant à la formule (I) est choisi parmi le groupe constitué par

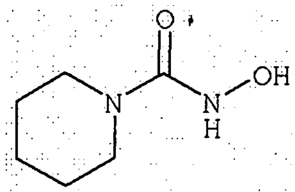 ,

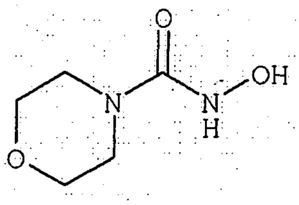 ,

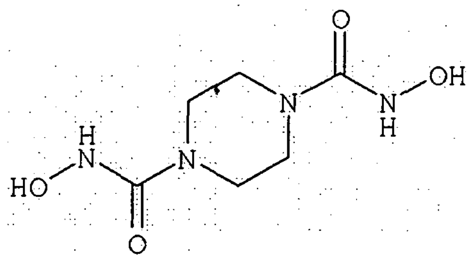 ,

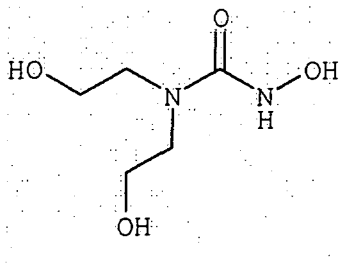 ,

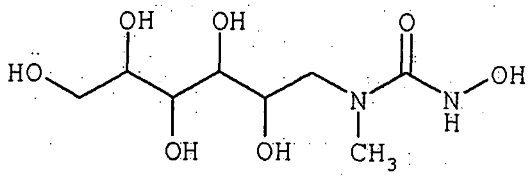 ,

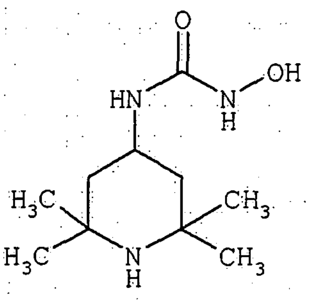 ,

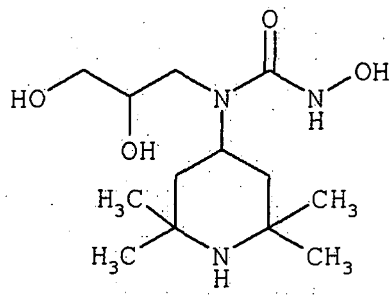 ,

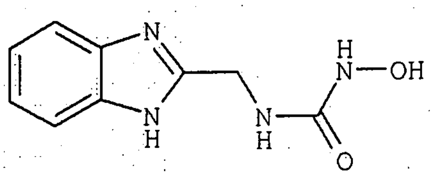 ,

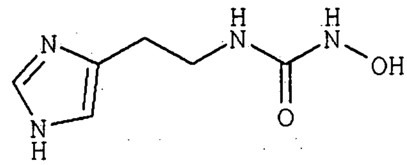 ,

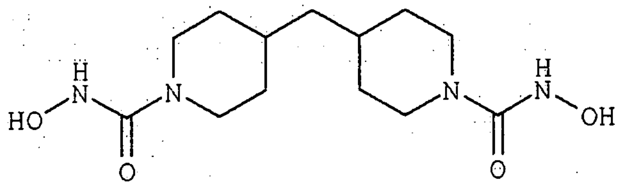,

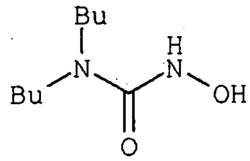,

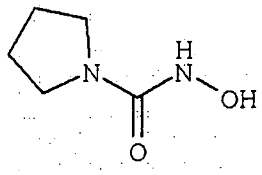,

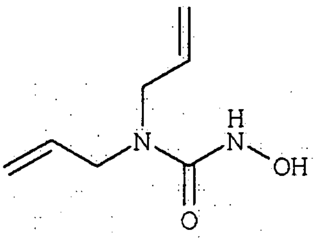,

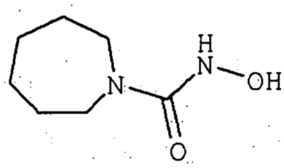,

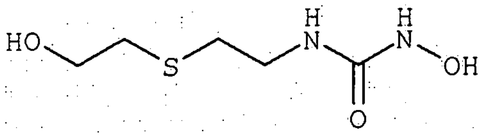,

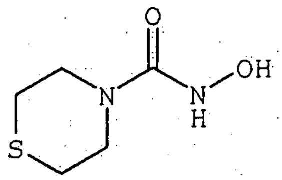,

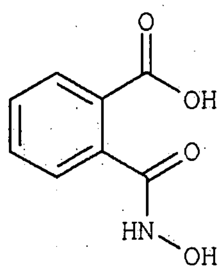,

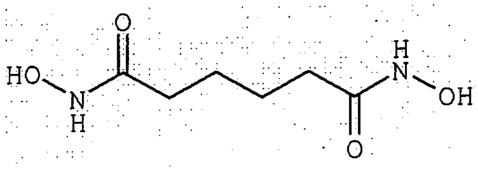,

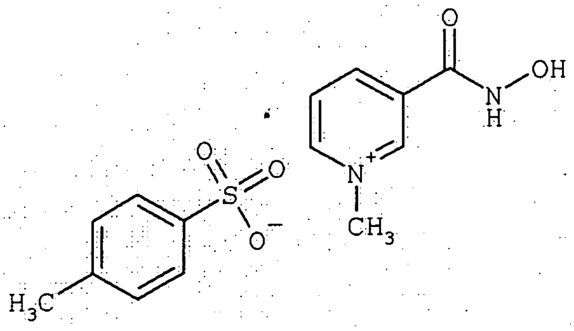,

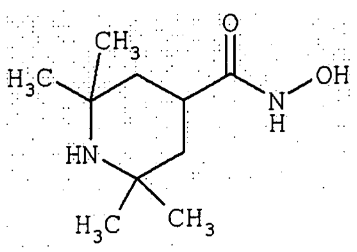,

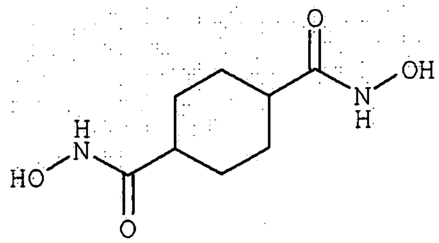,

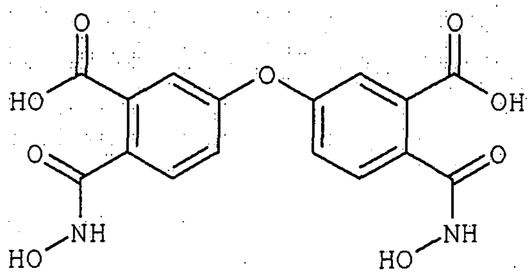
,
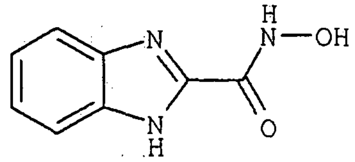
,

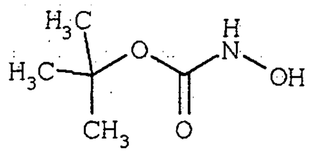
,
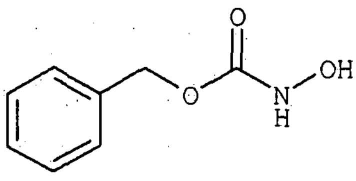
et
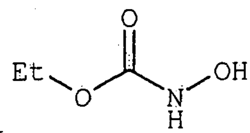
.

8. Utilisation d'un composé non polymère répondant à la formule (I) :

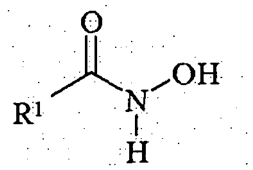

dans laquelle

$R^1$ est choisi parmi le groupe constitué par un groupe $-CR^2R^3R^4$, un groupe $-OCR^5R^6R^7$ et un groupe $-NR^8R^9$,
$R^2$, $R^3$, $R^5$, $R^6$ et $R^8$ sont choisis, indépendamment les uns des autres, parmi le groupe constitué par un atome d'hydrogène, des groupes aliphatiques non substitués, saturés ou insaturés, des groupes aliphatiques saturés ou insaturés, substitués avec des hétéroatomes, un noyau aromatique ou hétéroaromatique substitué ou non substitué, des groupes alicycliques non substitués, saturés ou insaturés et des groupes alicycliques saturés ou insaturés, substitués avec des hétéroatomes ;
$R^4$, $R^7$ et $R^9$ sont choisis, indépendamment les uns des autres, parmi le groupe constitué par des groupes aliphatiques non substitués saturés ou insaturés, des groupes aliphatiques saturés ou insaturés substitués avec des hétéroatomes, un noyau aromatique ou hétéroaromatique substitué ou non substitué, des groupes alicycliques non substitués, saturés ou insaturés et des groupes alicycliques saturés ou insaturés, substitués avec des hétéroatomes ;
$R^3$ et $R^4$ peuvent représenter les atomes nécessaires pour former un noyau pentagonal à octogonal ;
$R^5$ et $R^7$ peuvent représenter les atomes nécessaires pour former un noyau pentagonal à octogonal ; et
$R^8$ et $R^9$ peuvent représenter les atomes nécessaires pour former un noyau pentagonal à octogonal ; dans un matériau d'enregistrement pour jet d'encre ou dans un liquide à des fins de coulage sur une image que l'on obtient par jet d'encre.

9. Utilisation selon la revendication 8, dans laquelle ledit composé non polymère répondant à la formule (I) est choisi parmi le groupe constitué par :

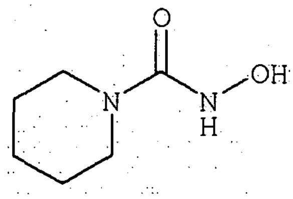

,

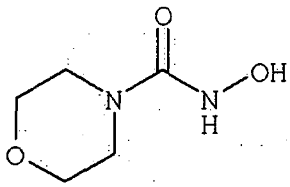

,

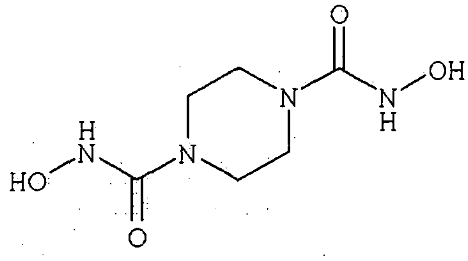

,

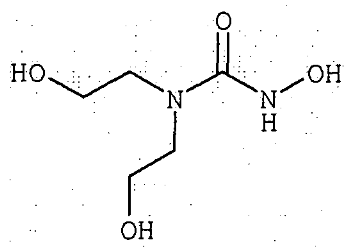

,

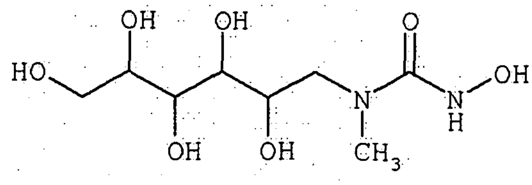

,

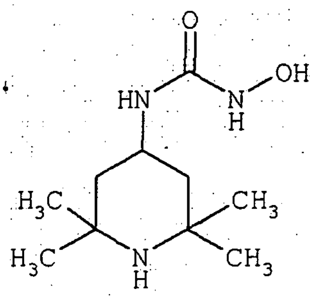

,

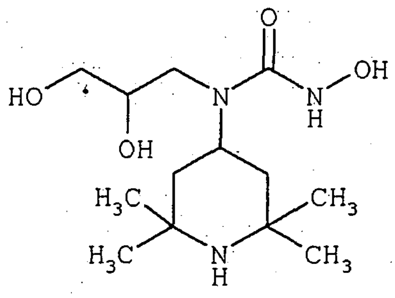

,

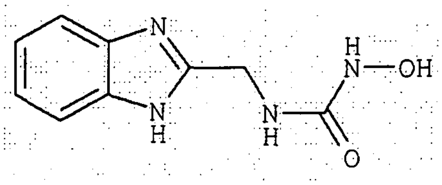

,

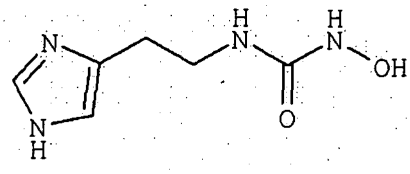

,

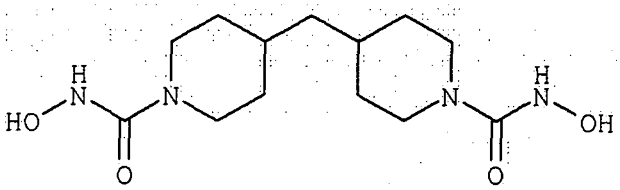

,

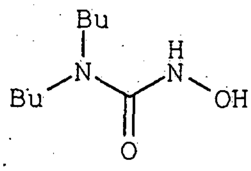

,

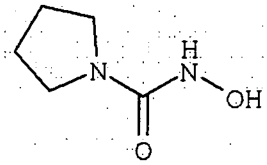 , 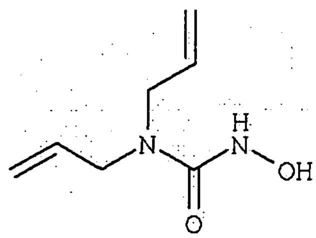 , 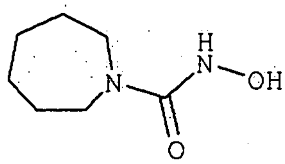 ,

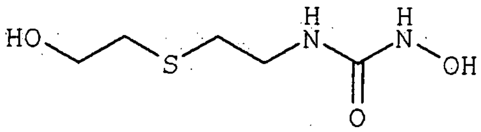 , 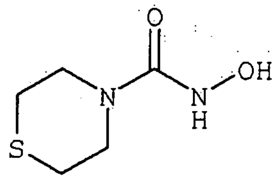 , 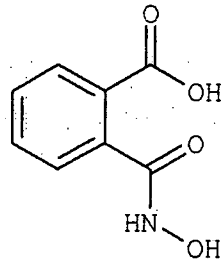 ,

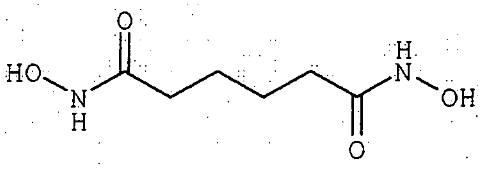 , 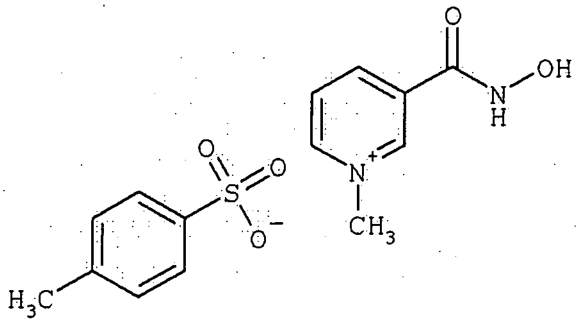 ,

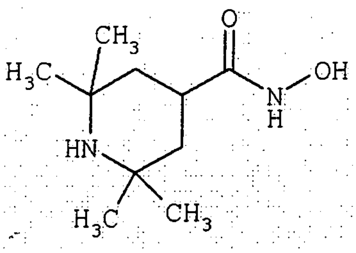 , 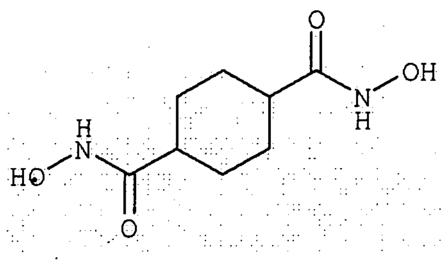 ,

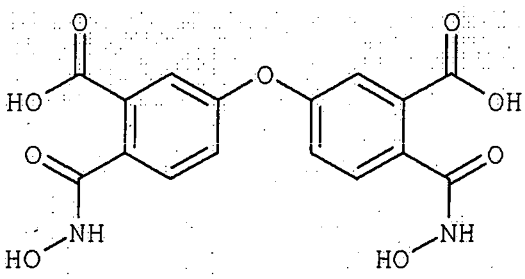 , 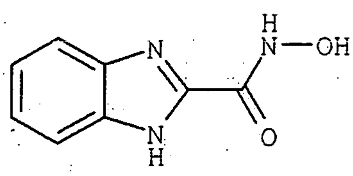 ,

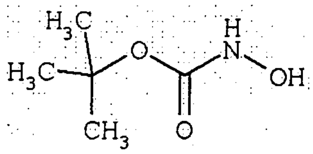 , 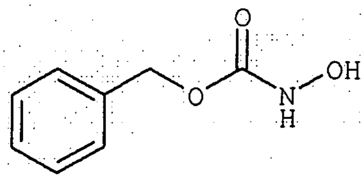 et 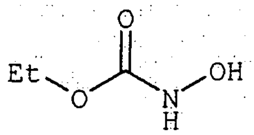 .

**10.** Procédé pour stabiliser une image sur un matériau d'enregistrement par jet d'encre, selon l'une quelconque des revendications 1 à 7, comprenant les étapes consistant à :

(1) préparer une solution de coulage comprenant au moins un composé répondant à la formule (I), et
(2) couler ladite solution de coulage sur un support, sur une couche de réception d'encre ou sur une image que l'on obtient par jet d'encre.